(19) Europäisches Patentamt
European Patent Office
Office européen des brevets

(11) EP 2 711 674 A1

(12) EUROPEAN PATENT APPLICATION

(43) Date of publication:
26.03.2014 Bulletin 2014/13

(51) Int Cl.:
G01J 3/26 (2006.01)  G02B 5/28 (2006.01)

(21) Application number: 13184739.4

(22) Date of filing: 17.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 19.09.2012 JP 2012205346

(71) Applicant: Seiko Epson Corporation
Shinjuku-ku
Tokyo (JP)

(72) Inventors:
• Matsushita, Tomonori
Nagano 392-8502 (JP)
• Arai, Yoshifumi
Nagano 392-8502 (JP)

(74) Representative: HOFFMANN EITLE
Patent- und Rechtsanwälte
Arabellastrasse 4
81925 München (DE)

(54) **Spectroscope comprising wavelength variable interference filter**

(57) A spectrometer includes a first reflective film, a second reflective film facing the first reflective film with a gap interposed therebetween, a gap change portion that changes the amount of the gap by changing the relative position of the second reflective film with respect to the first reflective film, and a processing unit that outputs optical characteristic data at a predetermined first wavelength interval on the basis of light of a plurality of the wavelengths to be measured which are extracted by the first reflective film and the second reflective film by changing the gap amount using the gap change portion, wherein a full width at half maximum of a spectrum of at least one component of light among the light of the plurality of wavelengths to be measured which are extracted by the first reflective film and the second reflective film is larger than the first wavelength interval.

FIG. 2

**Description**

<u>BACKGROUND</u>

1. Technical Field

The present invention relates to a spectroscope, a wavelength variable interference filter, an optical filter device, an optical module, and an electronic device.

2. Related Art

Hitherto, Fabry-Perot type etalons (wavelength variable interference filter) that extract light of a predetermined wavelength from incident light and measure the extracted light have been known (see, for example, JP-A-1-94312).

The device disclosed in JP-A-1-94312 is a variable interferometer (optical module) including a Fabry-Perot interference portion (wavelength variable interference filter) which causes substrates having a reflective film provided to face each other, and in which a piezoelectric element is provided between the substrates, and a control circuit which applies a voltage to the piezoelectric element. In this optical module, an interval between the substrates is changed by applying a voltage to the piezoelectric element, and the wavelength of light passing through the wavelength variable interference filter is changed.

In addition, when an optical spectrum of incident light is measured using the wavelength variable interference filter as mentioned above, transmitted light is received in a light receiving element by sequentially changing the size of the reflective film of the wavelength variable interference filter. Thereby, it is possible to acquire the amount of light of a wavelength to be measured having a predetermined wavelength interval, and to measure an optical spectrum by plotting the amount of light obtained with respect to the wavelength to be measured.

Incidentally, as mentioned above, when light of the wavelength to be measured for each predetermined wavelength interval is transmitted by the wavelength variable interference filter to thereby acquire the amount of light, and an optical spectrum is measured on the basis of the amount of light acquired, it may be required to acquire the precise amount of light with respect to each wavelength to be measured. For this reason, hitherto, it has been preferable to reduce a full width at half maximum of a transmission wavelength in the wavelength variable interference filter.

However, when the full width at half maximum of the transmission wavelength is reduced, the amount of transmitted light is also reduced to that extent. For this reason, there is a problem in that a SN ratio deteriorates, and there is a tendency to be influenced by noise components.

<u>SUMMARY</u>

An advantage of some aspects of the invention is to provide a spectroscope, a wavelength variable interference filter, an optical filter device, an optical module, and an electronic device which are capable of achieving an increase in the amount of light extracted.

An aspect of the invention is directed to a spectroscope including: a first reflective film that reflects a portion of incident light and transmits a portion thereof; a second reflective film, that is disposed to face the first reflective film, reflects a portion of incident light and transmits a portion thereof; a gap change portion that changes a size of a gap between the first reflective film and the second reflective film; and a processing unit that outputs optical characteristic data at a predetermined first wavelength interval on the basis of light of a plurality of wavelengths to be measured which are extracted by causing light incident between the first reflective film and the second reflective film to be interfered with by changing the size of the gap using the gap change portion, wherein a full width at half maximum of light of the plurality of wavelengths to be measured which are extracted by interference of incident light between the first reflective film and the second reflective film is larger than the first wavelength interval.

In the aspect of the invention, light of a plurality of wavelengths to be measured is extracted by changing the gap amount between the first reflective film and the second reflective film using the gap change portion, and the processing unit outputs the optical characteristic data for each first wavelength interval on the basis of the plurality of wavelengths to be measured. Here, in the aspect of the invention, the full width at half maximum is equal to or more than the first wavelength interval which is a data output interval of the optical characteristic data, in the optical characteristics of at least one component of light among the light of the plurality of wavelengths to be measured. For this reason, the light includes not only the light of the wavelength to be measured, but also the light of wavelength region of equal to or more than the first wavelength interval, and thus it is possible to further increase the amount of light extracted, for example, than in a case where only the light of the wavelength to be measured is output.

In addition, in the aspect of the invention, it is possible to achieve an increase in the amount of light as mentioned above, without increasing the number of light sources that emit light incident on the first reflective film and the second reflective film, and without lowering the emission intensity of the light source. That is, in the aspect of the invention, it is possible to achieve both the simplification of the configuration and an increase in the amount of light extracted by the first reflective film and the second reflective film. As mentioned above, by an increase in the amount of light extracted by the first reflective film and the second reflective film, it is not likely to be influenced by noise components, for example, when the optical characteristic data is processed by the processing unit, and thus it is possible to output high-precision optical characteristic data.

In the spectroscope of the aspect of the invention, it is preferable that the spectroscope further includes a gap control unit that controls the gap change portion and changes light of a wavelength to be measured which is extracted by causing light incident between the first reflective film and the second reflective film to be interfered with at a second wavelength interval larger than the first wavelength interval, wherein a full width at half maximum of at least one component of light among the light of the plurality of wavelengths to be measured which are extracted by the first reflective film and the second reflective film may be larger than the second wavelength interval.

In the spectroscope of this configuration, the processing unit outputs the optical characteristic data for each first wavelength interval on the basis of the light of the wavelength to be measured for each second wavelength interval larger than the first wavelength interval. The full width at half maximum in the optical characteristics of at least one component of light among the light of the plurality of wavelengths to be measured becomes larger than the second wavelength interval which is a wavelength interval of the wavelength to be measured. For this reason, in the aspect of the invention, the light extracted by the first reflective film and the second reflective film includes light of a wider wavelength region centered on the wavelength to be measured, and thus it is possible to further increase the amount of light to that extent.

In the spectroscope of the aspect of the invention, it is preferable that the spectroscope further includes an optical member provided on an optical axis of the first reflective film and the second reflective film, wherein a full width at half maximum in characteristics obtained by combining optical characteristics of light extracted by the first reflective film and the second reflective film with optical characteristics of the optical member may be larger than the second wavelength interval.

Here, the optical member is a member, having optical characteristics, which is disposed on the light path of the first reflective film and the second reflective film, and includes, for example, a detection unit that detects the amount of light extracted by the first reflective film and the second reflective film, a light source that emits light to the first reflective film and the second reflective film, a filtering element such as a band pass filter that extracts only light of a predetermined wavelength region from light caused to be incident on the first reflective film and the second reflective film, a lens or a mirror, and the like. The optical characteristics of each optical member are characteristics influencing the amount of light passing through the optical member, and include, for example, detection sensitivity characteristics in the detection unit, emission intensity characteristics in the light source, light transmittance characteristics in the filtering element or the lens, reflectance characteristics in the mirror, and the like.

In the aspect of the invention having the configuration described above, each of the optical members, the first reflective film and the second reflective film are set so that the full width at half maximum in the characteristics obtained by combining the optical characteristics of the optical members with the optical characteristics in the wavelength variable interference filter constituted by the first reflective film and the second reflective film becomes the measurement wavelength interval. In such a configuration, it is possible to increase the amount of light detected in the detection unit without using the optical member.

In the spectroscope of the aspect of the invention, it is preferable that the processing unit performs a spectrum estimation of extracting a wavelength component of a principal component from a measurement spectrum based on the light of the plurality of wavelengths to be measured and removing other wavelength components, and estimates an optical spectrum of incident light incident on the first reflective film and the second reflective film.

In the aspect of the invention having the configuration described above, the processing unit performs the spectrum estimation on the basis of the light extracted by the first reflective film and the second reflective film. In such a spectrum estimation, the wavelength to be measured which is a principal component is extracted, and other component are cut. Therefore, even when the wavelength variable interference filter having a large full width at half maximum is used as mentioned above, it is possible to accurately estimate the amount of light of the wavelength to be measured which is a principal component, and to perform a high-precision optical spectrum estimation.

In the spectroscope of the aspect of the invention, it is preferable that the processing unit causes a transformation matrix that transforms the measurement spectrum into an optical spectrum for first wavelength interval to act on the measurement spectrum, and estimates the optical spectrum.

In the aspect of the invention having the configuration described above, it is possible to easily estimate a high-precision optical spectrum just by causing the transformation matrix to act on the obtained measurement spectrum.

In the spectroscope of the aspect of the invention, it is preferable that a minimum value of reflectance of the first reflective film and the second reflective film with respect to a measurement wavelength region on which a spectroscopic measurement is performed by the spectroscope is equal to or less than 75% and equal to or more than 30%.

In the aspect of the invention having the configuration described above, the minimum value of reflectance of the measurement wavelength region of the first reflective film and the second reflective film is equal to or less than 75% and equal to or more than 30%. Thereby, it is possible to increase the amount of light extracted by the first reflective film and the second reflective film. That is, when the reflectance for the measurement wavelength region is larger than 75%, the amount of transmitted light decreases, and thus it is not possible to set the full width at half maximum to conditions as mentioned above (full width at half maximum is reduced). In addition, when the minimum value of reflectance is less than 30%, a function as the wavelength variable interference filter deteriorates, and thus it is difficult to extract appropriate light. That is, transmission is performed on almost all of the wavelengths within the measurement wavelength region without a multiple interference action using the first reflective film and the second reflective film.

On the other hand, in the aspect of the invention, the minimum value of reflectance is set as mentioned above, and thus the wavelength variable interference filter is able to extract light of the wavelength region centered on a predetermined wavelength to be measured, with the sufficient amount of light.

In the spectroscope of the aspect of the invention, it is preferable that the first reflective film or the second reflective film is formed of Ag or an Ag alloy, and a thickness size thereof is equal to or less than 40 nm and equal to or more than 15 nm.

In the aspect of the invention having the configuration described above, as the first reflective film and the second reflective film, the Ag metal film or the Ag alloy film is formed so as to have a thickness size of 15 nm to 40 nm. In such a configuration, it is possible to set the minimum value of reflectance of the first reflective film and the second reflective film to a range of equal to or less than 75% and equal to or more than 30% as mentioned above. In addition, since the Ag metal film or the Ag alloy film has reflectance characteristics with respect to a wide wavelength region, it is possible to set, for example, a wavelength region from visible light to near-infrared light as the measurement wavelength region.

In the spectroscope of the aspect of the invention, it is preferable that the first reflective film and the second reflective film are formed of a $TiO_2$ single-layer film.

In the aspect of the invention having the configuration described above, since the first reflective film and the second reflective film are formed of a $TiO_2$ single-layer film, it is possible to further suppress film deterioration than in a case where the Ag metal film, the Ag alloy film or the like is used, and to achieve the lifetime duration of the spectroscope.

In the spectroscope of the aspect of the invention, it is preferable that the first reflective film and the second reflective film are formed of an ITO single-layer film.

In the aspect of the invention having the configuration described above, the first reflective film and the second reflective film are formed of an ITO single-layer film. In this case, similarly to the above-mentioned aspect of the invention, it is possible to further suppress film deterioration than in a case where the Ag metal film, the Ag alloy film or the like is used. In addition, in a case where the gap change portion has an electrode, a case where an electrode for removing the charging of the first reflective film or the second reflective film is provided, a case where an electrode for measuring the gap interval between the first reflective film and the second reflective film is provided, and the like, it is possible to form the first reflective film, the second reflective film, and the electrodes thereof simultaneously (using one process). Therefore, it is possible to improve the manufacturing efficiency of the wavelength variable interference filter.

In the spectroscope of the aspect of the invention, it is preferable that the minimum transmittance of an interference filter constituted by the first reflective film and the second reflective film is equal to or more than 5% and less than 45% with respect to light of each wavelength within a measurement wavelength region on which a spectroscopic measurement is performed by the spectroscope.

In the aspect of the invention having the configuration described above, the minimum transmittance of the interference filter constituted by the first reflective film and the second reflective film is equal to or more than 5% and less than 45%, and the light of each wavelength within the measurement wavelength region has transmission characteristics. Thereby, it is possible to extract light of each wavelength within other measurement wavelength regions, in addition to the light of a predetermined wavelength region centered on the wavelength to be measured, and to achieve an increase in the amount of light.

In the spectroscope of the aspect of the invention, it is preferable that at least one component of light among the light of a plurality of the wavelengths to be measured which are extracted by the first reflective film and the second reflective film has two or more maximum values in a measurement wavelength region on which a measurement is performed by the spectroscope.

In the aspect of the invention having the configuration described above, another wavelength having maximum light transmittance is present in addition to the peak wavelength corresponding to the wavelength to be measured. In such a case, it is possible to further increase the amount of transmitted light in the wavelength having maximum transmittance.

Another aspect of the invention is directed to a wavelength variable interference filter including: a first reflective film that reflects a portion of incident light and transmits a portion thereof; a second reflective film, provided facing the first reflective film with a gap interposed therebetween, which reflects a portion of incident light and transmits a portion thereof; and a gap change portion that changes a gap between the first reflective film and the second reflective film,

wherein a minimum value of reflectance of the first reflective film and the second reflective film is equal to or less than 75% and equal to or more than 30%.

In the aspect of the invention, the minimum value of reflectance of the measurement wavelength region of the first reflective film and the second reflective film is equal to or less than 75% and equal to or more than 30%.

When the reflectance for the measurement wavelength region is larger than 75%, the amount of transmitted light decreases, and thus the full width at half maximum is reduced in the optical characteristics of the wavelength variable interference filter. In addition, when the minimum value of reflectance is less than 30%, a function as the wavelength variable interference filter deteriorates, and thus it is difficult to extract appropriate light.

On the other hand, in the wavelength variable interference filter of the aspect of the invention, it is possible to increase the full width at half maximum of a spectral curve, to obtain light of a wide wavelength region centered on the light of the wavelength to be measured, and to increase the amount of light. Therefore, it is possible to suppress an disadvantage such as a tendency to be influenced by noise due to the lack of the amount of light.

In the wavelength variable interference filter of the aspect of the invention, it is preferable that the first reflective film or the second reflective film is formed of Ag or an Ag alloy, and a thickness size thereof is equal to or less than 40 nm and equal to or more than 15 nm.

In the aspect of the invention having the configuration described above, as the first reflective film and the second reflective film, the Ag metal film or the Ag alloy film is formed so as to have a thickness size of 15 nm to 40 nm, and thus it is possible to appropriately set the minimum value of reflectance of the first reflective film and the second reflective film to a range of equal to or less than 75% and equal to or more than 30% as mentioned above. In addition, since the Ag metal film or the Ag alloy film has reflectance characteristics with respect to a wide wavelength region, it is possible to set, for example, a wavelength region from visible light to near-infrared light as the measurement wavelength region.

Still another aspect of the invention is directed to an optical filter device including: a wavelength variable interference filter including a first reflective film that reflects a portion of incident light and transmits a portion thereof, a second reflective film, provided facing the first reflective film with a gap interposed therebetween, which reflects a portion of incident light and transmits a portion thereof, and a gap change portion that changes a gap between the first reflective film and the second reflective film; and a housing that houses the wavelength variable interference filter, wherein a minimum value of reflectance of the first reflective film and the second reflective film is equal to or less than 75% and equal to or more than 30%, the first reflective film or the second reflective film is formed of Ag or an Ag alloy, and a thickness size thereof is equal to or less than 40 nm and equal to or more than 15 nm.

In the aspect of the invention, similarly to the above-mentioned aspect of invention, it is possible to increase the full width at half maximum of a spectral curve of the light extracted by the wavelength variable interference filter, and to increase the amount of light.

In addition, since the wavelength variable interference filter is housed inside the housing, it is possible to suppress the attachment of foreign substances to the first reflective film or the second reflective film, and to suppress the deterioration of the reflective film or the lowering of measurement accuracy. Further, the wavelength variable interference filter is protected by the housing, and thus is strengthened against an external force such as an impact.

Yet another aspect of the invention is directed to an optical module including: a first reflective film that reflects a portion of incident light and transmits a portion thereof; a second reflective film, provided facing the first reflective film with a gap interposed therebetween, which reflects a portion of incident light and transmits a portion thereof; a gap change portion that changes a gap between the first reflective film and the second reflective film; and a detection unit that detects light extracted by the first reflective film and the second reflective film, wherein a minimum value of reflectance of the first reflective film and the second reflective film is equal to or less than 75% and equal to or more than 30%, the first reflective film or the second reflective film is formed of Ag or an Ag alloy, and a thickness size thereof is equal to or less than 40 nm and equal to or more than 15 nm.

In the aspect of the invention, similarly to of the above-mentioned aspect of the invention, when the incident light is extracted by interference between the first reflective film and the second reflective film, it is possible to increase the full width at half maximum of a spectral curve of the extracted light, and to increase the amount of light. Therefore, it is not likely to be influenced by noise, and thus it is possible to detect the amount of light with high precision.

Still yet another aspect of the invention is directed an electronic device including: a wavelength variable interference filter including a first reflective film that reflects a portion of incident light and transmits a portion thereof, a second reflective film, provided facing the first reflective film with a gap interposed therebetween, which reflects a portion of incident light and transmits a portion thereof, and a gap change portion that changes a gap between the first reflective film and the second reflective film; and a control unit that controls the wavelength variable interference filter, wherein a minimum value of reflectance of the first reflective film and the second reflective film is equal to or less than 75% and equal to or more than 30%, the first reflective film or the second reflective film is formed of Ag or an Ag alloy, and a thickness size thereof is equal to or less than 40 nm and equal to or more than 15 nm.

In the aspect of the invention, similarly to the above-mentioned aspect of the invention, it is possible to increase the full width at half maximum of a spectral curve of the light extracted by the wavelength variable interference filter, and to increase the amount of light, and thus it is not likely to be influenced by noise components. For this reason, the accuracy of processing in the processing unit is improved.

BRIEF DESCRIPTION OF THE DRAWINGS

The invention will be described with reference to the accompanying drawings, wherein like numbers reference like elements.

Fig. 1 is a block diagram illustrating a schematic configuration of a spectrometer according to a first embodiment of the invention.

Fig. 2 is a cross-sectional view a wavelength variable interference filter of the first embodiment.

Fig. 3 is a diagram illustrating an outline of a method of measuring an optical spectrum of the related art.

Fig. 4 is a diagram illustrating an optical spectrum estimated by a method of the related art and an actual optical spectrum.

Fig. 5 is a diagram illustrating optical characteristics (transmittance characteristics) of the wavelength variable interference filter of the present embodiment.

Fig. 6 is a diagram illustrating a full width at half maximum of each wavelength in the optical characteristics of Fig. 5.

Fig. 7 is a diagram illustrating optical characteristics of a wavelength variable interference filter of the related art.

Fig. 8 is a diagram illustrating a full width at half maximum in each wavelength in the optical characteristics of Fig. 7.

Fig. 9 is a diagram illustrating a relationship between a full width at half maximum in the optical characteristics of the wavelength variable interference filter and a current (PD current) which is output when light is received by a detector.

Fig. 10 is a diagram illustrating an optical spectrum estimated by a spectrum processing unit using the wavelength variable interference filter of the first embodiment.

Fig. 11 is a diagram illustrating an optical spectrum measured by a measurement method of the related art using the wavelength variable interference filter of the first embodiment.

Fig. 12 is a diagram illustrating a difference (solid line) between an optical spectrum estimated by a spectroscopic measurement unit of the first embodiment and an actual optical spectrum and a difference (broken line) between an optical spectrum measured by the measurement method of the related art and an actual optical spectrum, when the full width at half maximum of the wavelength variable interference filter is changed.

Fig. 13 is a diagram illustrating optical characteristics of a wavelength variable interference filter according to a second embodiment of the invention.

Fig. 14 is a diagram illustrating spectrum estimation results when the minimum value of transmittance in a spectrum floating region is equal to more than 45% in the second embodiment.

Fig. 15 is a cross-sectional view illustrating an optical filter device according to a third embodiment of the invention.

Fig. 16 is a diagram illustrating a schematic configuration of a colorimeter which is an example of an electronic device (spectroscope) according to the invention.

Fig. 17 is a schematic diagram illustrating an example of a gas detector which is an example of the electronic device (spectroscope) according to the invention.

Fig. 18 is a block diagram illustrating a configuration of a control system of the gas detector of Fig. 17.

Fig. 19 is a diagram illustrating a schematic configuration of a food analyzer which is an example of the electronic device (spectroscope) according to the invention.

Fig. 20 is a diagram illustrating a schematic configuration of a spectroscopic camera which is an example of the electronic device (spectroscope) according to the invention.

DESCRIPTION OF EXEMPLARY EMBODIMENTS

First Embodiment

Hereinafter, a first embodiment of the invention will be described with reference to the accompanying drawings.

Configuration of Spectrometer

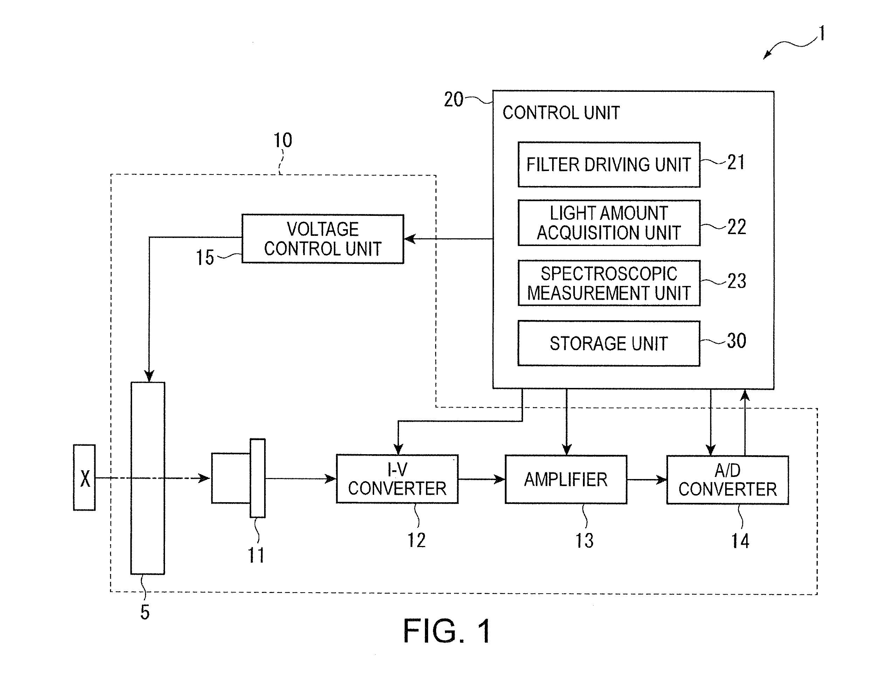

Fig. 1 is a block diagram illustrating a schematic configuration of a spectrometer (spectroscope) according to a first embodiment of the invention.

A spectrometer 1 is equivalent to a spectroscope and an electronic device according to the invention, and is a device that measures a spectrum of light to be measured on the basis of the light to be measured reflected from a measuring object X. Meanwhile, in the present embodiment, an example of measuring the light to be measured which is reflected from the measuring object X is illustrated, but as the measuring object X, for example, when an illuminant such as a liquid crystal panel is used, light emitted from the illuminant may be used as light to be measured.

As shown in Fig. 1, the spectrometer 1 includes an optical module 10 and a control unit 20.

Configuration of an Optical Module

Next, the configuration of the optical module 10 will be described below.

As shown in Fig. 1, the optical module 10 includes a wavelength variable interference filter 5, a detector 11 (detection unit), an I-V converter 12, an amplifier 13, an A/D converter 14, and a voltage control unit 15 (gap control unit).

The detector 11 receives light passing through the wavelength variable interference filter 5, and outputs a detection signal (current) in accordance with the light intensity of the received light.

The I-V converter 12 converts a detection signal which is input from the detector 11 into a voltage value, and outputs the converted value to the amplifier 13.

The amplifier 13 amplifies a voltage (detection voltage) in accordance with the detection signal which is input from the I-V converter 12.

The A/D converter 14 converts a detection voltage (analog signal) which is input from the amplifier 13 into a digital signal, and outputs the converted signal to the control unit 20.

The voltage control unit 15 applies a voltage to an electrostatic actuator 56, described later, of the wavelength variable interference filter 5, and transmits light of a target wavelength according to the applied voltage from the wavelength variable interference filter 5.

Configuration of Wavelength Variable Interference Filter

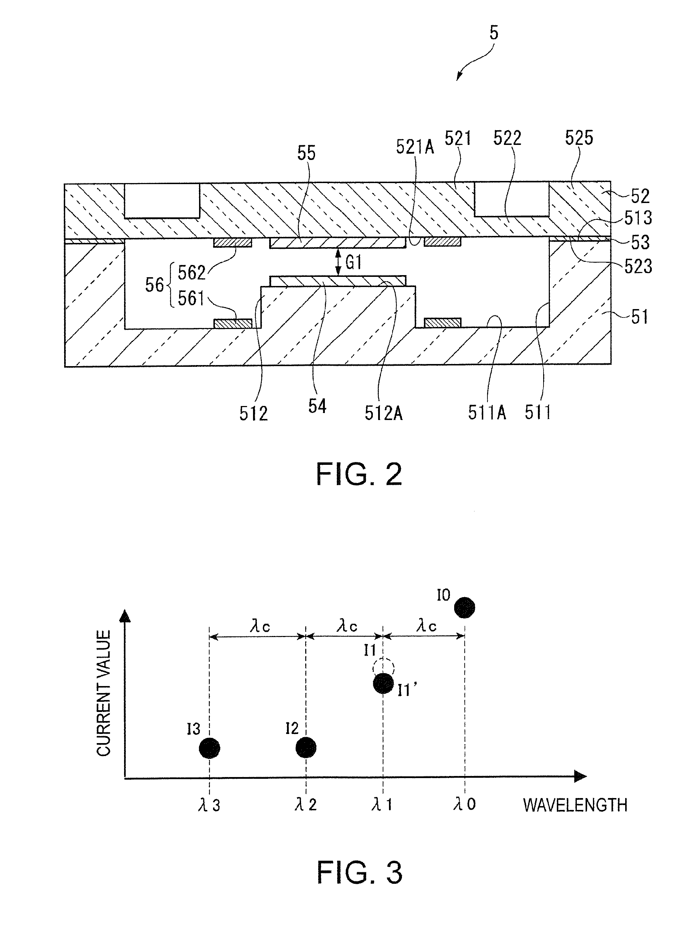

Fig. 2 is a cross-sectional view illustrating a schematic configuration of the wavelength variable interference filter 5.

The wavelength variable interference filter 5 of the present embodiment is a so-called Fabry-Perot etalon. As shown in Fig. 2, the wavelength variable interference filter 5 includes a fixed substrate 51 and a movable substrate 52. The fixed substrate 51 and the movable substrate 52 are formed of, for example, various types of glass, quartz crystal, silicon, or the like. The fixed substrate 51 and the movable substrate 52 are integrally formed through the bonding of a first bonding portion 513 of the fixed substrate 51 to a second bonding portion 523 of the movable substrate 52 using a bonding film 53 which is constituted by, for example, a siloxane-based plasma polymerized film and the like.

The fixed substrate 51 is provided with a fixed reflective film 54 (first reflective film), and the movable substrate 52 is provided with a movable reflective film 55 (second reflective film). The fixed reflective film 54 and the movable reflective film 55 are disposed so as to face each other with a gap G1 (gap) between reflective films interposed therebetween. The wavelength variable interference filter 5 is provided with an electrostatic actuator 56 (gap change portion) used for adjusting (changing) the amount of the gap G1 between the reflective films. The electrostatic actuator 56 is constituted by a fixed electrode 561 provided on the fixed substrate 51 and a movable electrode 562 provided on the movable substrate 52. The fixed electrode 561 and the movable electrode 562 face each other with an inter-electrode gap interposed therebetween, and function as the electrostatic actuator 56 (gap change portion). Here, the fixed electrode 561 and the movable electrode 562 may be provided directly on the surfaces of the fixed substrate 51 and the movable substrate 52, respectively, and may be provided through another film member. Meanwhile, in Fig. 2, an example is shown in which the amount of the inter-electrode gap is larger than the amount of the gap G1 between the reflective films, but a configuration may be used in which the inter-electrode gap is smaller than the gap G1 between the reflective films.

Hereinafter, the configuration of the wavelength variable interference filter 5 will be described in more detail.

An electrode installing groove 511 and a reflective film installing portion 512 are formed on the fixed substrate 51 by etching. The fixed substrate 51 is formed so as to have a thickness larger than that of the movable substrate 52, and thus there is no electrostatic attractive force when a voltage is applied to the electrostatic actuator 56, or no bending of the fixed substrate 51 due to internal stress of the fixed electrode 561.

The electrode installing groove 511 is formed, for example, in a circular shape centered on the planar center point of the fixed substrate 51. In the above-mentioned planar view, the reflective film installing portion 512 is formed so as to protrude from the central portion of the electrode installing groove 511 to the movable substrate 52 side. The groove bottom of the electrode installing groove 511 is an electrode installing surface 511A on which the fixed electrode 561 is disposed. In addition, the protruding apical surface of the reflective film installing portion 512 is a reflective film installing surface 512A.

In addition, although not shown in the drawing, the fixed substrate 51 is provided with an electrode extraction groove extending from the electrode installing groove 511 toward the outer circumferential edge of the fixed substrate 51, and is provided with an extraction electrode of the fixed electrode 561 provided in the electrode installing groove 511.

The fixed electrode 561 is provided on the electrode installing surface 511A of the electrode installing groove 511. More specifically, the fixed electrode 561 is provided on a region facing the movable electrode 562 of the movable portion 521, described later, in the electrode installing surface 511A. In addition, an insulating film for securing insulating properties between the fixed electrode 561 and the movable electrode 562 may be laminated on the fixed electrode 561. In addition, a fixed extraction electrode is connected to the fixed electrode 561. The fixed extraction electrode is extracted from the above-mentioned electrode extraction groove to the outer circumferential portion of the fixed substrate 51, and is connected to the voltage control unit 15.

Meanwhile, in the embodiment, the configuration is shown in which one fixed electrode 561 is provided on the electrode installing surface 511A, but a configuration (double electrode configuration) or the like may be formed, for example, in which two electrodes having a concentric circle centered on the planar center point are provided.

As mentioned above, the reflective film installing portion 512 is formed coaxially with the electrode installing groove 511 and in a substantially cylindrical shape having a diameter smaller than that of the electrode installing groove 511, and includes the reflective film installing surface 512A that faces the movable substrate 52 of the reflective film installing portion 512.

The fixed reflective film 54 is installed on the reflective film installing portion 512.

The fixed reflective film 54 is formed of an optical film having reflectance and transmittance with respect to light of a wavelength region (measurement wavelength region) serving as an object for measuring an optical spectrum using the spectrometer 1. Specifically, the fixed reflective film 54 is constituted by an optical film having optical characteristics in which the minimum value of reflectance is equal to or less than 75% and the maximum value thereof is equal to or more than 30% with respect to the measurement wavelength region. Here, when the minimum value of reflectance exceeds 75%, the full width at half maximum of the wavelength variable interference filter 5 becomes small, and the amount of light received in the detector 11 deteriorates. In addition, when the minimum value of reflectance is less than 30%, a wavelength selection function in the wavelength variable interference filter 5 deteriorates. That is, light of each wavelength for the wavelength to be measured is nearly transmitted, and thus the accuracy of measurement of the optical spectrum deteriorates without receiving the amount of light for a predetermined wavelength. On the other hand, as mentioned above, when the fixed reflective film 54 has optical characteristics in which the minimum value of reflectance is equal to or less than 75% and equal to or more than 30%, it is possible to transmit light having a sufficient amount of light and receive the light in the detector 11 while suppressing a deterioration in a wavelength selection function in the wavelength variable interference filter 5, and to achieve an improvement in the accuracy of measurement.

As such a fixed reflective film 54, any optical film may be used as long as the fixed reflective film has optical characteristics as mentioned above. For example, a metal film such as Ag, an alloy film such as an Ag alloy, a single-layer refractive layer (such as, for example, $TiO_2$ single-layer film, $SiO_2$ single-layer film, or ITO single-layer film), a dielectric multilayer film, a reflective film in which a metal film (or alloy film) is laminated on a dielectric multilayer film, a reflective film in which a dielectric multilayer film is laminated on a metal film (or alloy film), a reflective film in which a single-layer refractive layer (such as $TiO_2$ or $SiO_2$ and a metal film (or alloy film) are laminated, or the like can be used.

Particularly, when an Ag metal film or an Ag alloy film is used as the fixed reflective film 54, this film is preferably formed to have a film thickness of equal to or less than 40 nm and equal to or more than 15 nm. The Ag metal film or the Ag alloy film shows reflection characteristics with respect to a wavelength band having a large width, particularly, in a metal, and can satisfy optical characteristics as mentioned above (the minimum value of reflectance is equal to or less than 75% and equal to or more than 30%) when the film thickness thereof is equal to or less than 40 nm and equal to or more than 15 nm.

In addition, when a $TiO_2$ single-layer film, a $SiO_2$ single-layer film, or an ITO single-layer film is used as the fixed reflective film 54, it is possible to suppress a deterioration in a film, and to achieve the lifetime duration of the wavelength variable interference filter 5, with respect to a case where the Ag metal film or the Ag alloy film is used. Further, when the fixed reflective film 54 is formed of an ITO single-layer film, and the fixed electrode 561 is also formed of an ITO single-layer film, it is possible to simultaneously form the fixed reflective film 54 and the fixed electrode 561 using one process, and to achieve an improvement in manufacturing efficiency.

Meanwhile, a description will be given later of the optical characteristics of the wavelength variable interference filter 5 in a case where the fixed reflective film 54 is configured to have optical characteristics (reflectance characteristics) as mentioned above.

In addition, on the light incidence plane (plane on which the fixed reflective film 54 is not provided) of the fixed substrate 51, an anti-reflective film may be formed at a position corresponding to the fixed reflective film 54. Since this anti-reflective film can be formed by alternately laminating a low refractive index film and a high refractive index film, the reflectance of visible light from the surface of the fixed substrate 51 is reduced, and the transmittance thereof is increased.

The movable substrate 52 includes the circle-shaped movable portion 521 centered on the planar center point, a holding portion 522 which is coaxial with the movable portion 521 and holds the movable portion 521, and a substrate outer circumferential portion 525 provided outside the holding portion 522.

The movable portion 521 is formed so as to have a thickness larger than that of the holding portion 522, and is formed so as to have the same thickness as that of the movable substrate 52, for example, in the embodiment. In the planar view of the filter, the movable portion 521 is formed so as to have a diameter larger than at least the diameter of the outer circumferential edge of the reflective film installing surface 512A. The movable portion 521 is provided with the movable electrode 562 and the movable reflective film 55.

Meanwhile, similarly to the fixed substrate 51, an anti-reflective film may be formed on the surface of the movable portion 521 on the opposite side to the fixed substrate 51. Such an anti-reflective film can be formed by alternately laminating a low refractive index film and a high refractive index film, thereby allowing the reflectance of visible light from the surface of the movable substrate 52 to be reduced, and allowing the transmittance thereof to be increased.

The movable electrode 562 faces the fixed electrode 561 with the inter-electrode gap interposed therebetween, and is formed in a circular shape having the same shape as that of the fixed electrode 561. In addition, although not shown in the drawing, the movable substrate 52 is provided with a movable extraction electrode extending from the outer circumferential edge of the movable electrode 562 toward the outer circumferential edge of the movable substrate 52. The movable extraction electrode is connected to the voltage control unit 15, similarly to the fixed extraction electrode.

On the central portion of a movable surface 521A of the movable portion 521, the movable reflective film 55 is provided facing the fixed reflective film 54 with the gap G1 between the reflective films interposed therebetween. As the movable reflective film 55, a reflective film having the same configuration as that of the above-mentioned fixed reflective film 54 is used.

The holding portion 522 is a diaphragm that surrounds the periphery of the movable portion 521, and is formed so as to have a thickness smaller than that of the movable portion 521. Such a holding portion 522 is more likely to be bent than the movable portion 521, and thus can cause the movable portion 521 to be displaced to the fixed substrate 51 side due to slight electrostatic attractive force. At this time, the movable portion 521 has a thickness larger than that of the holding portion 522, and has a rigidity larger than that. Thus, even when the holding portion 522 is pulled to the fixed substrate 51 side due to electrostatic attractive force, a change in the shape of the movable portion 521 is not caused. Therefore, the movable reflective film 55 provided on the movable portion 521 is not only bent, but also the fixed reflective film 54 and movable reflective film 55 can always be maintained to the parallel state.

Meanwhile, in the embodiment, the diaphragm-shaped holding portion 522 is illustrated by way of example, but without being limited thereto, for example, beam-shaped holding portions which are disposed at equiangular intervals centered on the planar center point may be provided.

As mentioned above, the substrate outer circumferential portion 525 is provided outside the holding portion 522 in the planar view of the filter. The surface of the substrate outer circumferential portion 525 facing the fixed substrate 51 includes the second bonding portion 523 which faces the first bonding portion 513, and the second bonding portion 523 is bonded to the first bonding portion 513 by the bonding film 53.

Configuration of Control Unit

Returning to Fig. 1, the control unit 20 of the spectrometer 1 will be described.

The control unit 20 is equivalent to a processing unit according to the invention, is configured by a combination of, for example, a CPU, a memory and the like, and controls the entire operation of the spectrometer 1. As shown in Fig. 1, the control unit 20 includes a filter driving unit 21, a light amount acquisition unit 22, and a spectroscopic measurement unit 23. In addition, the control unit 20 includes a storage unit 30 constituted by a ROM (Read Only Memory), a RAM (Random Access Memory) and the like. Various types of data are stored in the storage unit 30, and V-λ data for controlling the electrostatic actuator 56 is stored in the storage unit 30.

A voltage value applied to the electrostatic actuator 56 with respect to the peak wavelength of light passing through the wavelength variable interference filter 5 is recorded in the V-λ data.

The filter driving unit 21 outputs a command signal for causing light within a predetermined measurement wavelength region to pass through the wavelength variable interference filter 5 at a predetermined measurement wavelength interval. Specifically, the filter driving unit 21 outputs a control signal to the voltage control unit 15 so as to read a voltage value corresponding to a wavelength λn to be measured (n=0, 1, 2, 3···) for each measurement wavelength interval λc (for example, λc=20 nm) on the basis of the V-λ data and sequentially apply a voltage corresponding to the voltage value to the electrostatic actuator 56 of the wavelength variable interference filter 5. Thereby, the voltage control unit 15 applies a commanded voltage to the electrostatic actuator 56, and the gap G1 between the reflective films is sequentially switched, so that the peak wavelength (center wavelength) of light transmitted from the wavelength variable interference filter 5 is sequentially changed.

The light amount acquisition unit 22 acquires the amount (intensity) of light received in the detector 11, on the basis of a signal (voltage) which is input from the A/D converter 14.

The spectroscopic measurement unit 23 measures spectral characteristics of light to be measured, on the basis of the amount of light acquired by the light amount acquisition unit 22.

Here, in the present embodiment, in the optical characteristics of the wavelength variable interference filter 5, even when the full width at half maximum is large, the following spectrum estimation process is performed in order to accurately calculate the optical spectrum of measurement light reflected from the measuring object X.

That is, as shown in the following Expression (1), the spectroscopic measurement unit 23 estimates an optical spectrum S of the light to be measured (light reflected from the measuring object X) by causing an estimation matrix Ms (transformation matrix) stored in a storage unit (not shown) such as, for example, a memory to act on a measurement spectrum (amount of light for each wavelength to be measured) D obtained by the light amount acquisition unit 22.

Meanwhile, the spectrometer 1 measures reference light in which a precise optical spectrum So is measured in advance, and thus the estimation matrix Ms is calculated from a measurement spectrum Do obtained by the measurement, and the precise optical spectrum So.

$$S^{t} = Ms \cdot D^{t} \qquad \cdots \ (1)$$

In the above Expression (1), "t" denotes a transposed vector. In Expression (1), the optical spectrum S and the measurement spectrum D are denoted as a "row vector", and thus the transposed vector becomes a "column vector".

When the above Expression (1) is represented in a state where each element is specified, the expression is represented as Expression (2).

$$\begin{pmatrix} s1 \\ s2 \\ s3 \\ \cdot \\ \cdot \\ \cdot \\ s59 \\ s60 \\ s61 \end{pmatrix} = \begin{pmatrix} m1 \cdot 1 & m1 \cdot 2 & m1 \cdot 3 & \cdot & \cdot & \cdot & m1 \cdot 16 \\ m2 \cdot 1 & m2 \cdot 2 & m2 \cdot 3 & \cdot & \cdot & \cdot & m2 \cdot 16 \\ m3 \cdot 1 & m3 \cdot 2 & m3 \cdot 3 & \cdot & \cdot & \cdot & m3 \cdot 16 \\ \cdot & \cdot & \cdot & & & & \cdot \\ \cdot & \cdot & \cdot & & & & \cdot \\ \cdot & \cdot & \cdot & & & & \cdot \\ m59 \cdot 1 & m59 \cdot 2 & m59 \cdot 3 & \cdot & \cdot & \cdot & m59 \cdot 16 \\ m60 \cdot 1 & m60 \cdot 2 & m60 \cdot 3 & \cdot & \cdot & \cdot & m60 \cdot 16 \\ m61 \cdot 1 & m61 \cdot 2 & m61 \cdot 3 & \cdot & \cdot & \cdot & m61 \cdot 16 \end{pmatrix} \begin{pmatrix} d1 \\ d2 \\ d3 \\ \cdot \\ \cdot \\ \cdot \\ d14 \\ d15 \\ d16 \end{pmatrix} \qquad \cdots \ (2)$$

In the above Expression (2), the measurement spectrum D is constituted by elements of a number equivalent to the number of wavelengths (number of bands) to be measured in the spectrometer 1. In addition, in the present embodiment, the measurement wavelength region (400 nm to 700 nm) is measured at a pitch of 20 nm. In this case, in the above Expression (2), the measurement wavelength region is constituted by sixteen elements of d1 to d16. Meanwhile, these elements of d1 to d16 become the amount of light acquired by the light amount acquisition unit 22 with respect to each wavelength to be measured.

In addition, the optical spectrum S is constituted by elements of a number equivalent to the number of wavelengths (number of spectra) to be estimated. For example, in the above Expression (2), the optical spectrum S is estimated by setting a target wavelength region of 400 nm to 700 nm to a wavelength having a data output wavelength interval λd (for example, λd=pitch of 5 nm). Therefore, the number of elements of the row vector of the optical spectrum S is sixty-one. That is, the data output wavelength interval λd is equivalent to a first wavelength interval according to the invention.

Therefore, the estimation matrix Ms for estimating the optical spectrum S from the measurement spectrum D becomes a matrix of 61 rows ×□16 columns as shown in Expression (2).

Here, the number of elements of the measurement spectrum D is sixteen, whereas the number of elements of the optical spectrum S is sixty-one. Therefore, it is not possible to determine the estimation matrix Ms of 61 rows × 16 columns simply by a set of measurement spectrum D and optical spectrum S. Therefore, the estimation matrix Ms is determined by measuring a plurality of sample light (reference light in which the optical spectrum So is measured in advance) using the spectrometer 1.

Such an estimation matrix Ms is determined as follows. That is, the plurality of sample light (reference light) in which the optical spectrum S is measured in advance is measured using the spectrometer 1, and the measurement spectrum Do for each sample light is acquired. At this time, the measurement spectrum Do may be transformed into a measurement spectrum corresponding to spectral reflectance divided by a measurement spectrum Dw of a standard white plate.

Here, when the optical spectrum S is assumed to have elements of the number k of spectra (sixty-one in the case of Expression (2)), and the sample light of the number n of samples are measured, the optical spectrum So can be represented in the form of a matrix $S^t$ as shown in the following Expression (3). In addition, the measurement spectrum Do has elements of the number b of bands (16 in the case of Expression (2)), and measurement results are obtained with respect to the sample light of the number n of samples, respectively. Therefore, the measurement spectrum Do can be represented in the form of a matrix $D^t$ as shown in the following Expression (4).

$$S^t_{nk} = \begin{pmatrix} s1{\cdot}1 & s1{\cdot}2 & s1{\cdot}3 & \cdot & \cdot & \cdot & s1{\cdot}n \\ s2{\cdot}1 & s2{\cdot}2 & s2{\cdot}3 & \cdot & \cdot & \cdot & s2{\cdot}n \\ \cdot & \cdot & \cdot & & & & \cdot \\ \cdot & \cdot & \cdot & & & & \cdot \\ \cdot & \cdot & \cdot & & & & \cdot \\ s60{\cdot}1 & s60{\cdot}2 & s60{\cdot}3 & \cdot & \cdot & \cdot & s60{\cdot}n \\ s61{\cdot}1 & s61{\cdot}2 & s61{\cdot}3 & \cdot & \cdot & \cdot & s61{\cdot}n \end{pmatrix} \qquad \cdot \cdot \cdot \ (3)$$

$$D^t_{nb} = \begin{pmatrix} d1{\cdot}1 & d1{\cdot}2 & d1{\cdot}3 & \cdot & \cdot & \cdot & d1{\cdot}n \\ d2{\cdot}1 & d2{\cdot}2 & d2{\cdot}3 & \cdot & \cdot & \cdot & d2{\cdot}n \\ \cdot & \cdot & \cdot & & & & \cdot \\ \cdot & \cdot & \cdot & & & & \cdot \\ \cdot & \cdot & \cdot & & & & \cdot \\ d15{\cdot}1 & d15{\cdot}2 & d15{\cdot}3 & \cdot & \cdot & \cdot & d15{\cdot}n \\ d16{\cdot}1 & d16{\cdot}2 & d16{\cdot}3 & \cdot & \cdot & \cdot & d16{\cdot}n \end{pmatrix} \qquad \cdot \cdot \cdot \ (4)$$

An evaluation function F (Ms) = $|S^t{-}Ms{\cdot}D^t|^2$ is set indicating a deviation between the matrix $S^t$ and the inner product $(Ms{\cdot}D^t)$ of the matrix $D^t$ and the estimation matrix Ms, and the estimation matrix Ms is determined so that the evaluation function F (Ms) is minimized. That is, since a value obtained by partially differentiating the evaluation function F (Ms) by the estimation matrix Ms is equal to 0, the estimation matrix Ms can be determined by the following Expression (5).

$$Ms = (D^t{\cdot} D)^{-1}{\cdot} D^t{\cdot} S \qquad \cdot \cdot \cdot \ (5)$$

Meanwhile, in the above description, an error is assumed not to be present in the optical spectrum So of the sample light which is reference light, but the estimation matrix Ms considering an error of the optical spectrum So of the sample light may be determined. That is, the optical spectrum So of the sample light is measured using a measuring device such as a multi-spectral colorimeter. However, in the measuring device, the optical spectrum So is measured by extracting light in an extremely narrow wavelength range of several nm or so. In this manner, when the extremely narrow wavelength range is extracted, the amount of light decreases, and an SN ratio lowers, which leads to a tendency for errors to be superimposed. In such a case, when a principal component analysis method is used, a matrix $S_{nk}$ can be represented as "$S_{nk}{=}a_{nj}{\cdot}V_{jk}$" by setting a principal component number to j, setting a principal component value to a, and setting a principal component vector to v, and the estimation matrix Ms considering the error of the sample light can also be calculated.

Meanwhile, other estimation processes may be performed without being limited to the above-mentioned spectrum estimation process, and, for example, a Wiener estimation method or the like may be used.

Optical Characteristics of Wavelength Variable Interference Filter 5

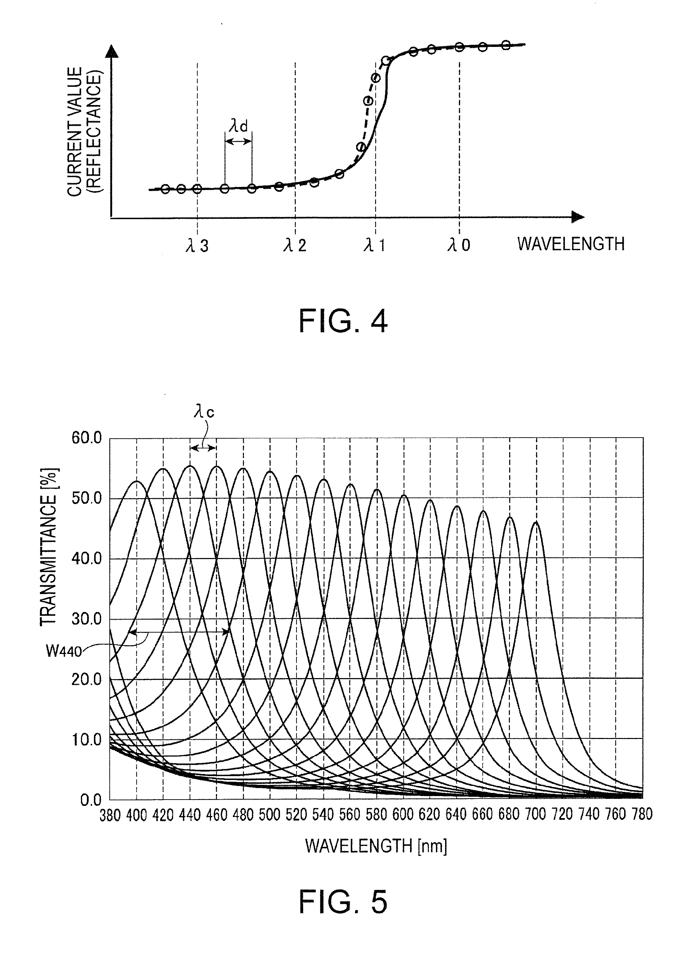

Figs. 3 and 4 are diagrams illustrating outlines of a measurement method of an optical spectrum of the related art. Fig. 3 shows the amount of light (current value from the detector 11) of each wavelength to be measured which is obtained by measurement. Fig. 4 is a diagram illustrating an optical spectrum estimated by a method of the related art and an actual optical spectrum. The broken line shows the optical spectrum estimated by the method of the related art, and the solid line shows the actual optical spectrum.

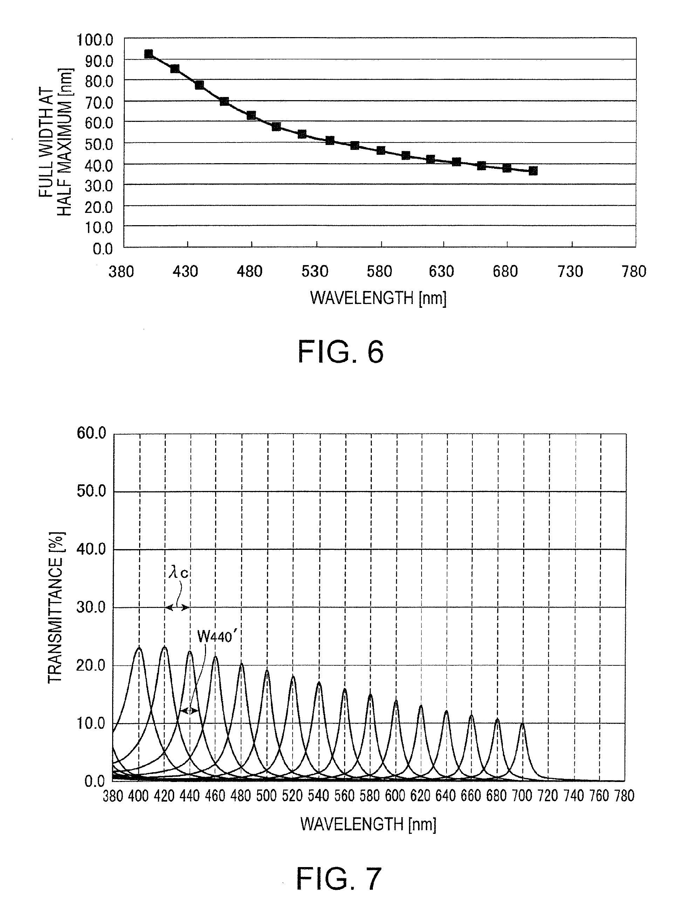

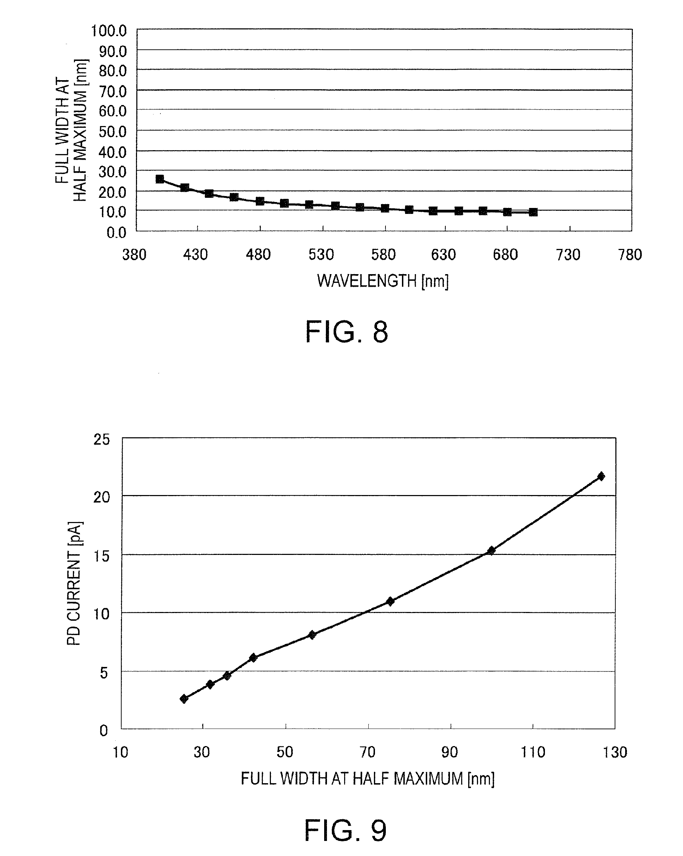

In addition, Fig. 5 is a diagram illustrating optical characteristics (transmittance characteristics) of the wavelength variable interference filter 5 of the present embodiment, and Fig. 6 is a diagram illustrating a full width at half maximum of each wavelength in the optical characteristics of Fig. 5. Fig. 7 is a diagram illustrating optical characteristics of a wavelength variable interference filter of the related art, and Fig. 8 is a diagram illustrating a full width at half maximum for each wavelength in the optical characteristics of Fig. 7.

Hitherto, in an electronic device such as a spectrometer, when a precise optical spectrum is analyzed, the amount of light of the wavelength $\lambda n$ to be measured (n=0, 1, 2, 3 ⋯ ) for each measurement wavelength interval $\lambda c$ has been acquired by sequentially switching the gap between the reflective films of the wavelength variable interference filter, as shown in Fig. 3. The amount of light for each wavelength to be measured is plotted on a graph indicating, for example, a relationship between the wavelength and the amount of light, and the optical spectrum of measurement light has been measured by connecting these amounts as shown in Fig. 4. In such a configuration of the related art, it is necessary to transmit light of a desired wavelength to be measured at a high resolution using the wavelength variable interference filter, and to suppress the transmission of light of other wavelength regions. Therefore, as shown in Figs. 7 and 8, the full width at half maximum is set to be small with respect to the measurement wavelength interval of each wavelength to be measured. For example, when a spectral curve having a wavelength of 440 nm in Fig. 7 is adopted by way of example, a full width at half maximum $W_{440}'$ is smaller than the measurement wavelength interval $\lambda c$.

That is, when the amount of light detected by the detector is set to the amount of light for the wavelength to be measured, the full width at half maximum has been required to be set to be small so that light other than the wavelength to be measured is not mixed to the utmost in order to measure a high-precision optical spectrum. In addition, in the related art, when the full width at half maximum is equal to or more than the data output wavelength interval (first wavelength interval) $\lambda d$, the amount of light of multiple wavelengths to be measured is included in one piece of data, and thus it is considered that a measurement error of the optical spectrum becomes large. For this reason, when the optical spectrum is measured by the method of the related art, the full width at half maximum of the wavelength variable interference filter is preferably made smaller than the data output wavelength interval $\lambda d$.

However, as mentioned above, in the wavelength variable interference filter of the related art for making the full width at half maximum smaller, the amount of light passing through the wavelength variable interference filter is also reduced. Fig. 9 is a diagram illustrating a relationship between a full width at half maximum in the optical characteristics of the wavelength variable interference filter 5 and a current (PD current) which is output at the time of receiving light in the detector 11.

As shown in Fig. 9, the full width at half maximum and the PD current which is output from the detector 11 have a substantially proportional relationship, and as the full width at half maximum increases, the PD current which is output from the detector 11 linearly increases. Therefore, in the wavelength variable interference filter of the related art as mentioned above, it is not possible to obtain the sufficient amount of light received in the detector 11. Accordingly, there is a tendency to be influenced by a noise component due to light or the like (such as, for example, stray light) of wavelengths other than wavelength to be measured, and there is also a tendency for a measurement error to be generated.

In addition, in the optical characteristics of the wavelength variable interference filter, even when the full width at half maximum is set to be extremely small, it is difficult to completely narrow down the width to light of one wavelength. For example, in the wavelength region in which the optical spectrum of measurement light drastically changes like a wavelength $\lambda 1$ of Fig. 4, an error occurs between the actual optical spectrum and the amount of light (current value I1' in Fig. 3) obtained by measurement.

On the other hand, in the present embodiment, as shown in Figs. 5 and 6, the full width at half maximum of the wavelength variable interference filter 5 is set to be larger. Specifically, the full width at half maximum of the wavelength variable interference filter 5 of the present embodiment is set to be equal to or more than the data output wavelength interval $\lambda d$ (first wavelength interval) and equal to or more than the measurement wavelength interval (second wavelength interval) $\lambda c$. For example, in Fig. 5, the full width at half maximum $W_{440}$ in spectral curves in which a wavelength of 440 nm is used as a peak wavelength is appropriately 80 nm, and has a sufficiently large value as compared to the measurement wavelength interval $\lambda c$ (=20 nm) or the data output wavelength interval $\lambda d$ (=5 nm).

Accuracy of Optical Spectrum Estimation Process of Spectroscopic Measurement Unit 23

In the present embodiment as mentioned above, light of a wide wavelength region centered on the wavelength to be measured is mixed in the light passing through the wavelength variable interference filter 5. Even in such a case, the spectroscopic measurement unit 23 estimates the optical spectrum S by causing the estimation matrix Ms to act on the measurement spectrum D acquired by the detector 11. Therefore, it is possible to extract the amount of light of a principal component of the wavelength $\lambda n$ to be measured by cutting the amount of light of components other than the wavelength $\lambda n$ to be measured, and to calculate the precise optical spectrum S closer to the actual optical spectrum.

That is, in the present embodiment, even when noise components are mixed, it is possible to accurately cut these noise components. In addition, even when the optical spectrum of measurement light drastically changes, it is possible to accurately cut unnecessary wavelength components. Therefore, in the related art, it is possible to measure an optical spectrum having a high level of measurement accuracy only in a range to which the full width at half maximum of the wavelength variable interference filter is limited. However, in the present embodiment, it is possible to perform a high-accuracy optical spectrum estimation in a range in which the full width at half maximum is larger.

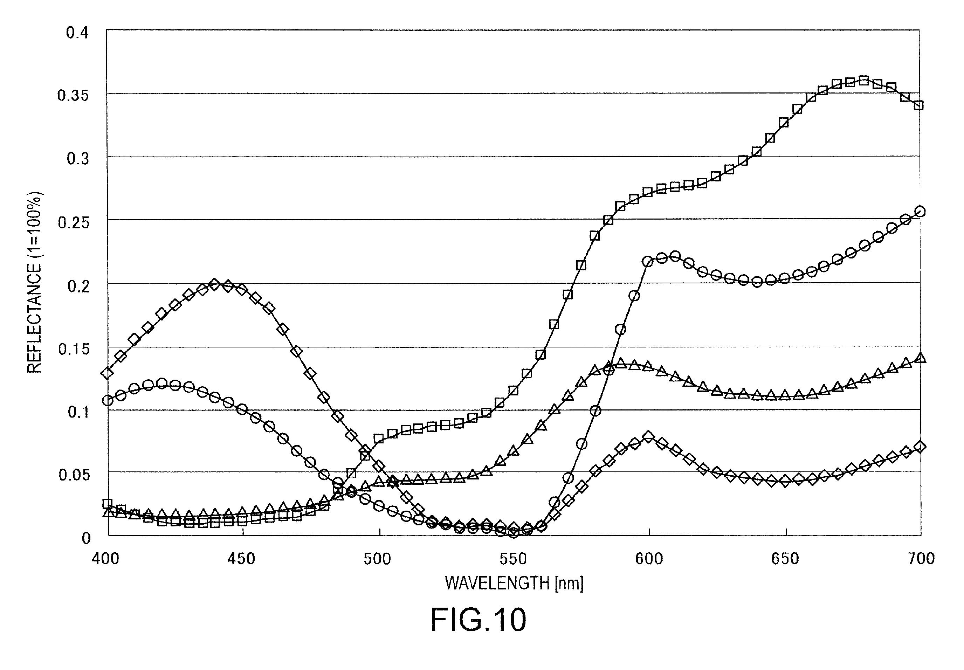

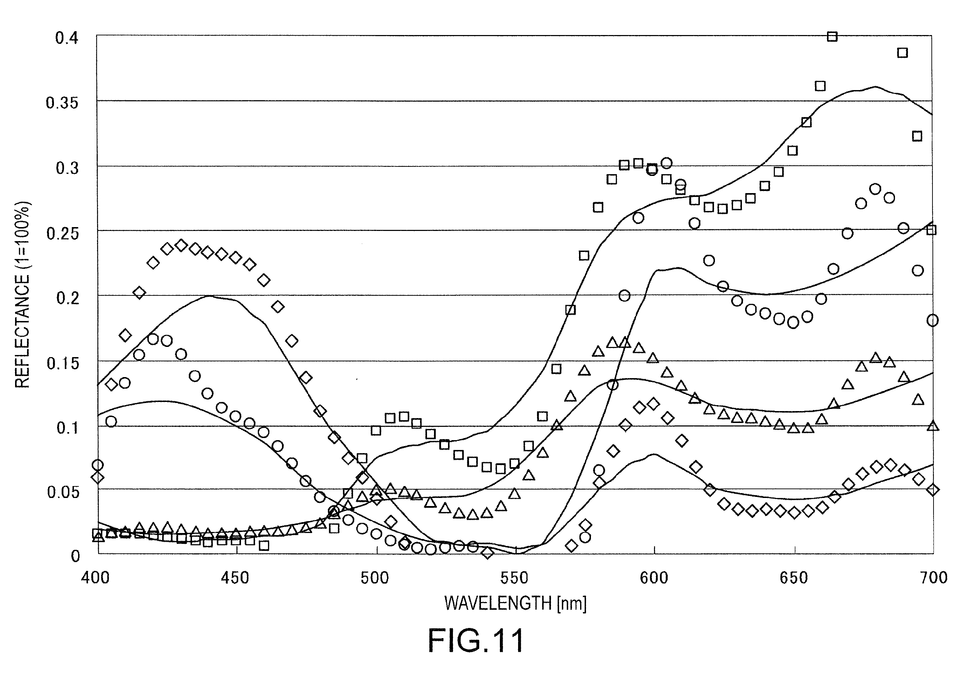

Fig. 10 is a diagram illustrating an optical spectrum estimated by the spectroscopic measurement unit 23 using the wavelength variable interference filter 5 of the present embodiment. In Fig. 10, the solid line indicates an actual optical spectrum of measurement light, and the plotted point indicates an estimation value of the optical spectrum for each data output wavelength interval $\lambda d$. In addition, Fig. 11 is a diagram illustrating an optical spectrum measured by a measurement method of the related art as shown in Figs. 3 and 4 using the wavelength variable interference filter 5 of the present embodiment. Meanwhile, in Fig. 11, the solid line indicates an actual optical spectrum of measurement light, and the plotted point indicates a point obtained by setting a curved line through a measured value for each measurement wavelength interval ($\lambda c$), and dividing the curved line for each data output wavelength interval $\lambda d$.

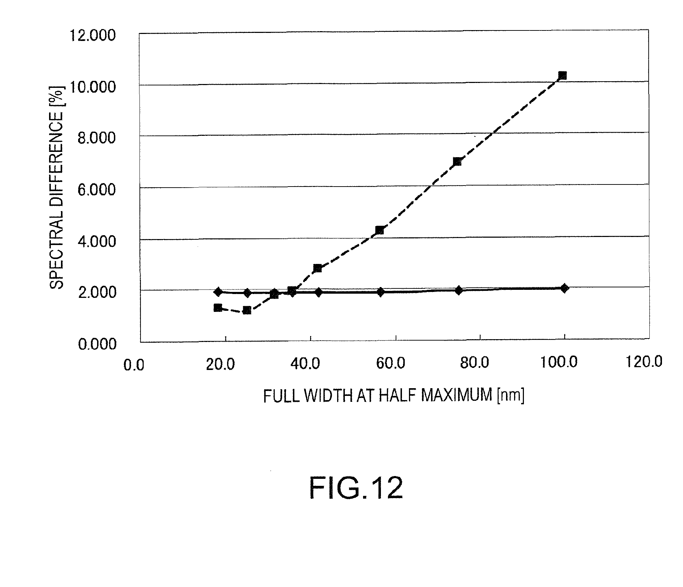

In addition, Fig. 12 is a diagram illustrating a difference (solid line) between the optical spectrum estimated by the spectroscopic measurement unit 23 of the present embodiment and the actual optical spectrum and a difference (broken line) between the optical spectrum measured by the measurement method of the related art and the actual optical spectrum, when the full width at half maximum of the wavelength variable interference filter 5 is changed.

As shown in Fig. 11, when the value of the amount of light detected by the detector 11 as in the related art is set to the amount of light of the wavelength to be measured which passes through the wavelength variable interference filter, there is a great divergence from the actual optical spectrum, and the accuracy of measurement deteriorates. In order to reduce the difference between the actual optical spectrum and the spectrum obtained by measurement, as shown in Fig. 7, it becomes necessary to use a wavelength variable interference filter having a small full width at half maximum.

On the other hand, when an optical spectrum estimation process is performed by the spectroscopic measurement unit 23 of the present embodiment, as shown in Fig. 10, the optical spectrum S which is substantially consistent with the actual optical spectrum can be estimated with a high degree of accuracy. In addition, as shown in Fig. 5, even when the full width at half maximum is large, the accuracy does not deteriorate.

Operations and Effects of First Embodiment

In the spectrometer 1 of the present embodiment, the full width at half maximum in the optical characteristics (spectral curve of the wavelength to be measured) of the wavelength variable interference filter 5 is larger than the data output wavelength interval $\lambda d$ or the measurement wavelength interval $\lambda c$ of the optical spectrum S in the spectroscopic measurement unit 23.

For this reason, not only the light of one wavelength to be measured, but also the light of the wavelength region of equal or more than the data output wavelength interval $\lambda d$ centered on the wavelength to be measured and equal to or more than the measurement wavelength interval $\lambda c$ passes through the wavelength variable interference filter 5. Therefore, since the amount of light passing through the wavelength variable interference filter 5 increases, and a detection signal (current) from the detector 11 also increases, it is possible to reduce the influence of noise components, and to improve the accuracy of measurement.

On the other hand, in the configuration in which the light of a plurality of wavelengths centered on the peak wavelength is extracted by the wavelength variable interference filter 5 as mentioned above, when the amount of light detected by the detector 11 is set to the amount of light for the peak wavelength (wavelength to be measured) as it is, an error becomes large. On the other hand, in the present embodiment, the amount of light of a component corresponding to the wavelength to be measured is extracted from a measurement spectrum obtained by the detector 11 by performing a spectrum estimation using the spectroscopic measurement unit 23, and the amount of light of other wavelength regions is cut. By performing such a process, even when the wavelength variable interference filter 5 having a large full width at half maximum is used, it is possible to perform a high-precision optical spectrum estimation process.

More specifically, in the present embodiment, a measurement result of the measurement spectrum for multiple wavelengths to be measured is set to a matrix $D^t$, and the estimation matrix Ms is caused to act on the above matrix, to thereby estimate the optical spectrum S. The estimation matrix Ms is a matrix in which sample light having the optical spectrum So being known is measured using the spectrometer 1, and which is calculated on the basis of the obtained spectrum Do and the optical spectrum So. Therefore, as mentioned above, it is possible to estimate the higher-precision optical spectrum S by causing the estimation matrix Ms to act on the measurement spectrum D.

In addition, as in the related art, when the measurement spectrum obtained by the detector 11 is set to an optical spectrum, an error becomes large in a case where the optical spectrum of measurement light drastically changes in the vicinity of a specific wavelength region. Even when an attempt or the like to enhance the accuracy is performed by reducing the full width at half maximum of the wavelength variable interference filter 5, it is difficult to extract only light of a predetermined one wavelength, and thus it is difficult to eliminate the error as mentioned above. In addition, as mentioned above, when the full width at half maximum of the wavelength variable interference filter 5 is reduced, the amount of light received in the detector 11 is reduced, and thus a measurement error due to the lack of the amount of light (noise component or the like) is generated. On the other hand, as in the present embodiment, the spectrum estimation of the spectroscopic measurement unit 23 is performed, and thus it is possible to estimate a high-precision optical spectrum at the predetermined data output wavelength interval $\lambda d$ even when the optical spectrum of measurement light drastically changes in the vicinity of a specific wavelength region.

In the present embodiment, the minimum value of the reflectance of the fixed reflective film 54 and the movable reflective film 55 in the measurement wavelength region is equal to or less than 75% and equal to or more than 30%.

When the minimum value of the reflectance of the fixed reflective film 54 and the movable reflective film 55 in the measurement wavelength region exceeds 75%, in the optical characteristics of the wavelength variable interference filter 5, the full width at half maximum for the peak wavelength is made small, and the amount of light passing through the wavelength variable interference filter 5 is reduced. On the other hand, when the minimum value of the reflectance of the fixed reflective film 54 and the movable reflective film 55 in the measurement wavelength region falls below 30%, the amount of light increases, but an effect of the multiple interference of light by the fixed reflective film 54 and the movable reflective film 55 is not obtained. That is, a wavelength selection function of the wavelength variable interference filter 5 deteriorates, and light of each wavelength of the measurement wavelength region passes through the wavelength variable interference filter 5 uniformly.

On the other hand, as mentioned above, when the minimum value of the reflectance of the fixed reflective film 54 and the movable reflective film 55 is equal to or less than 75% and equal to or more than 30%, it is possible to suitably achieve an increase in the amount of light while maintaining the wavelength selectivity of the wavelength variable interference filter 5.

In the present embodiment, as the fixed reflective film 54 and the movable reflective film 55, an Ag metal film or an $\lambda$g alloy film having reflection characteristics with respect to the wide wavelength region may be preferably used. In this case, the film thickness thereof is preferably set to equal to or more than 40 nm and equal to or less than 15 nm. In such a configuration, the minimum value of the reflectance of the fixed reflective film 54 and the movable reflective film 55 can be set to equal to or less than 75% and equal to or more than 30%.

In addition, as the fixed reflective film 54 and the movable reflective film 55, a single-layer film such as $TiO_2$, $SiO_2$, or ITO may be used. When such reflective films 54 and 55 are used, the deterioration of the reflective films 54 and 55 can be further suppressed than in a case where the Ag metal film or the Ag alloy film is used. In addition, when an ITO single-layer film is used as the fixed electrode 561 and the movable electrode 562 constituting the electrostatic actuator 56 using an ITO single-layer film, it is possible to simultaneously perform the formation of electrodes and the formation of reflective films, and to achieve an improvement in manufacturing efficiency.

As mentioned above, in a configuration in which the full width at half maximum of the wavelength variable interference filter 5 is increased, a lot of options are given to the reflective films 54 and 55, and the degree of design freedom in the wavelength variable interference filter 5 is improved. Thereby, it is also possible to manufacture the lower-cost wavelength variable interference filter 5, and to reduce the cost of the electronic device such as the optical module 10 or the spectrometer 1.

Second Embodiment

Next, a second embodiment of the invention will be described below.

In the above-mentioned first embodiment, as shown in Fig. 5, an example is illustrated in which the minimum value of transmittance in the measurement wavelength region (for example, 400 to 700 nm) is appropriately 0%, as the optical characteristics of the wavelength variable interference filter 5. On the other hand, in the second embodiment, an example is illustrated in which the minimum value of transmittance is not 0%.

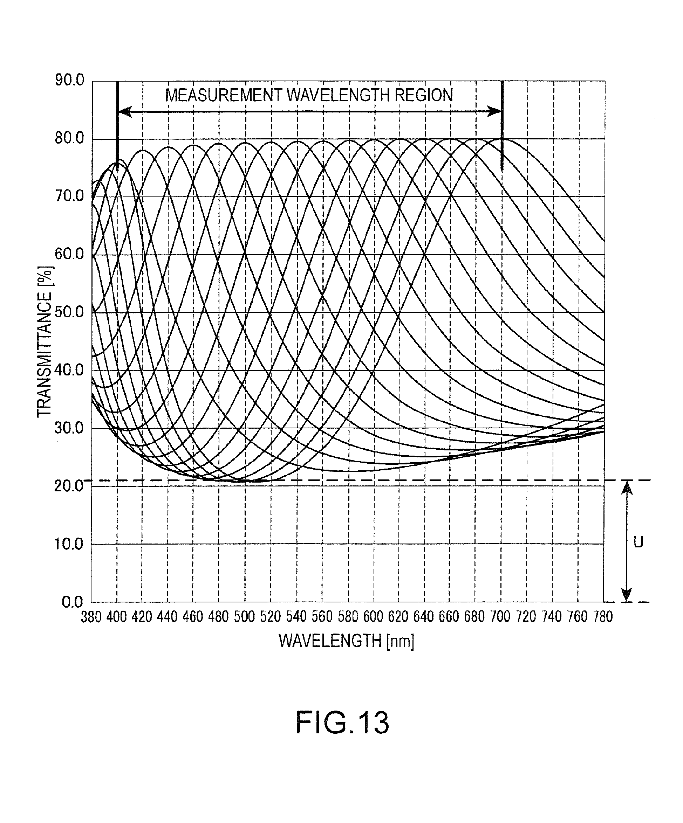

Fig. 13 is a diagram illustrating the optical characteristics of the wavelength variable interference filter 5 of the present embodiment.

In Fig. 13, the wavelength variable interference filter 5 of the present embodiment has the minimum transmittance of 20% or so in the wavelength to be measured. That is, even when the gap G1 between the reflective films is set to any values, equal to or more than 20% light of all the wavelengths within the measurement wavelength region is set to be transmitted, the entire spectral curve has a floating form. Meanwhile, as shown in Fig. 13, a region in which the spectral curve floats in the optical characteristics is called a spectrum floating region U.

The wavelength variable interference filter 5 having such optical characteristics can be formed by using a single-layer film such as TiO$_2$, SiO$_2$, or ITO, a metal film having a small thickness size, or a metal alloy film as the reflective films 54 and 55.

In addition, in Fig. 13, an example is illustrated in which the minimum value of reflectance becomes appropriately 20% with respect to the spectrum floating region U, but the value may be set to equal to or more than 5% and less than 45%.

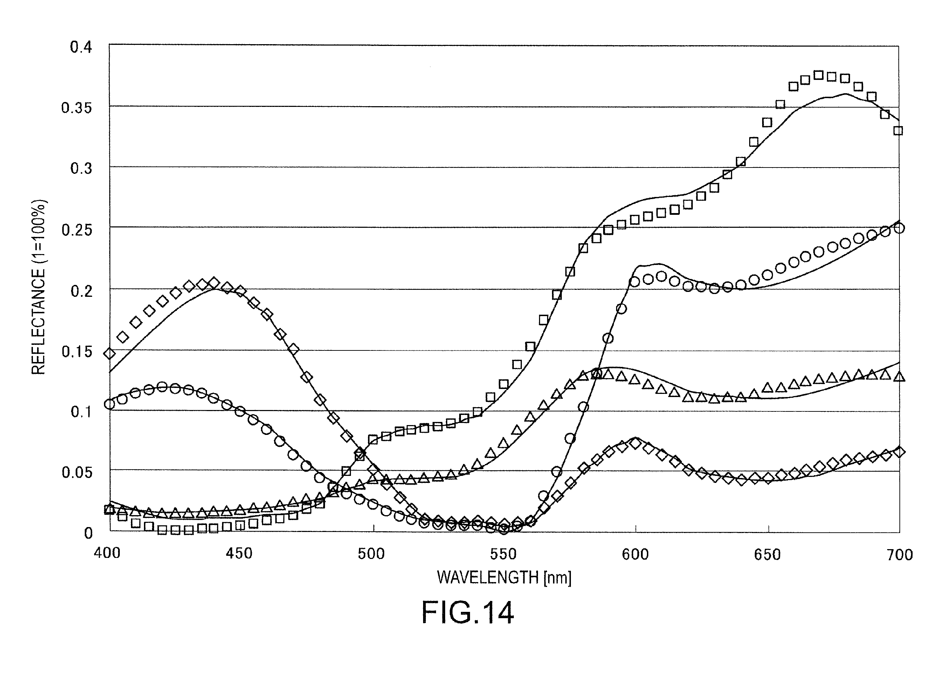

Fig. 14 is a diagram illustrating results when the optical spectrum estimation process is performed using the wavelength variable interference filter 5 in which the minimum value of transmittance is set to 45%, as the spectrum floating region U.

As can be seen by comparing Fig. 10 with Fig. 14, when the spectrum floating region exceeds 45% (when the minimum value of transmittance exceeds 45%), it is difficult to accurately split light of the wavelength serving as a principal component (light corresponding to the peak wavelength) from light passing through the wavelength variable interference filter 5, and the accuracy of the optical spectrum estimation process deteriorates.

In addition, the spectrum floating region may be less than 5% (the minimum value of transmittance is less than 5%) . However, in this case, a great difference between such a value and the optical characteristics of the wavelength variable interference filter 5 in the first embodiment does not occur, and thus an effect of an increase in the amount of light by the spectrum floating region is not much obtained.

Therefore, when the spectrum floating region U is provided, as mentioned above, the spectrum floating region U is set so that the minimum value of transmittance is equal to or more than 5% and less than 45%. By providing such a spectrum floating region U, it is possible to further improve the amount of light in the wavelength to be measured, and to further improve the accuracy of the estimation process of the optical spectrum in the spectrometer 1.

Alternatively, as the optical characteristics of the wavelength variable interference filter 5, as shown in Fig. 13, two peak wavelengths (for example, 400 nm and 680 nm) may appear within the wavelength region to be measured. In this manner, the amount of light passing through the wavelength variable interference filter 5 increases by providing a plurality of peak wavelengths, and thus the accuracy of measurement can be improved. Meanwhile, even when the plurality of peak wavelengths are provided, the optical spectrum S of which the component value of each peak wavelength is accurately analyzed can be estimated by the spectrum estimation process of the spectroscopic measurement unit 23, and thus the accuracy of measurement does not deteriorate.

Operations and Effects of Second Embodiment

In the present embodiment, the optical characteristics of the wavelength variable interference filter 5 have (have the floating region U of the spectrum) the minimum transmittance of equal to or more than 5% and less than 45% with respect to each wavelength within the measurement wavelength region. That is, when the gap G1 between the reflective films is changed in accordance with a predetermined wavelength to be measured, the most of light of the wavelength to be measured is transmitted as the peak wavelength depending on the gap G1 between the reflective films, but light of other wavelengths is also transmitted at the transmittance of equal to or more than 5% and less than 45%.

In the optical characteristics having such as floating region U of the spectrum, since the amount of light passing through the wavelength variable interference filter 5 can be increased, and a detection current which is output from the detector 11 also increases, it is possible to effectively suppress an influence of noise or the like.

In addition, as shown in the present embodiment, a plurality of peak wavelengths may be present within the measurement wavelength region, and other peak wavelengths different from the wavelength to be measured may be present in the vicinity of the upper limit and the lower limit of the measurement wavelength region. In such a case, light corresponding to the peak wavelength different from the wavelength to be measured is transmitted, thereby the amount of light can be further increased.

As mentioned above, even when light other than the wavelength to be measured passes through the wavelength variable interference filter 5, the spectrum estimation of the spectroscopic measurement unit 23 is performed, thereby the high-precision optical spectrum S can be estimated.

Third Embodiment

Next, a third embodiment of the invention will be described with reference to the accompanying drawings.

In the spectrometer 1 of the above-mentioned first embodiment, the optical module 10 is configured to be directly provided with the wavelength variable interference filter 5. However, an optical module may often have a complicated configuration, and particularly, it may be difficult that a small-size optical module is directly provided with the wavelength variable interference filter 5. In the present embodiment, an optical filter device capable of easily installing the wavelength variable interference filter 5 with respect to such an optical module will be described below.

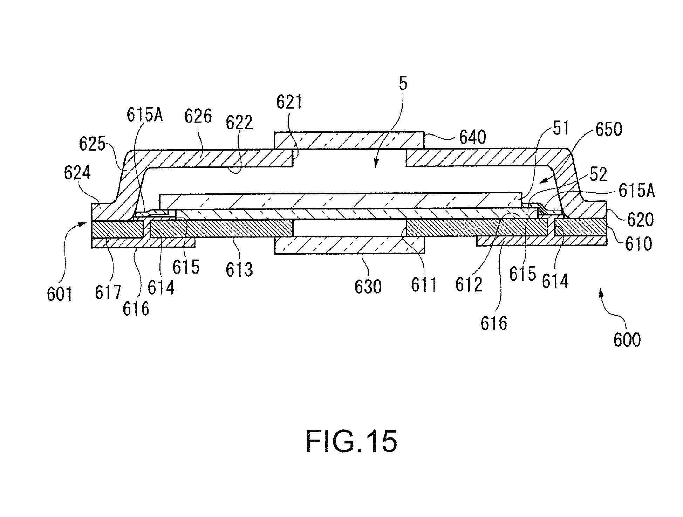

Fig. 15 is a cross-sectional view illustrating a schematic configuration of an optical filter device according to the third embodiment of the invention.

As shown in Fig. 15, an optical filter device 600 includes a wavelength variable interference filter 5 and a housing 601 that houses the wavelength variable interference filter 5. Meanwhile, in the present embodiment, the wavelength variable interference filter 5 of the first embodiment is illustrated as an example, but the wavelength variable interference filter 5 provided with the spectrum floating region U of the second embodiment may be used.

The housing 601 includes a base substrate 610, a lid 620, a glass substrate 630 on the base side, and a glass substrate 640 on the lid side.

The base substrate 610 is formed of, for example, a single-layer ceramic substrate. A movable substrate 52 of the wavelength variable interference filter 5 is installed on the base substrate 610. The installation of the movable substrate 52 on the base substrate 610 may be performed through, for example, an adhesion layer or the like, or may be performed by fitting to another fixed member or the like. In addition, a light passing hole 611 is formed in the base substrate 610 in an opening state. The glass substrate 630 on the base side is bonded so as to cover the light passing hole 611. As a bonding method of the glass substrate 630 on the base side, for example, glass frit bonding using a glass frit which is a fragment of glass obtained by dissolving a glass raw material at a high temperature and then performing rapid cooling thereon, bonding using an epoxy resin, or the like can be used.

A base inside surface 612 of the base substrate 610 facing the lid 620 is provided with an inside terminal portion 615 corresponding to an extraction electrode connected to a fixed electrode 561 of the wavelength variable interference filter 5 and an extraction electrode connected to a movable electrode 562. Meanwhile, the connection of each extraction electrode to the inside terminal portion 615 can be performed using, for example, an FPC 615A. For example, this connection is performed using an Ag paste, an ACF (Anisotropic Conductive Film), an ACP (Anisotropic Conductive Paste) or the like. In addition, wiring connection using, for example, wire bonding or the like may be performed without being limited to the connection using the FPC 615A.

In addition, on the base substrate 610, a through-hole 614 is formed corresponding to a position provided with each inside terminal portion 615. Each inside terminal portion 615 is connected to an outside terminal portion 616, provided on a base outside surface 613 on the opposite side to the base inside surface 612 of the base substrate 610, through a conductive member filled in the through-hole 614.

The outer circumferential portion of the base substrate 610 is provided with a base bonding portion 617 bonded to the lid 620.

As shown in Fig. 15, the lid 620 includes a lid bonding portion 624 bonded to the base bonding portion 617 of the base substrate 610, a side wall portion 625, continuous from the lid bonding portion 624, which stands up in a direction away from the base substrate 610, and a ceiling portion 626, continuous from the side wall portion 625, which covers the fixed substrate 51 side of the wavelength variable interference filter 5. The lid 620 can be formed of, for example, an alloy such as Kovar or a metal.

The lid 620 is closely bonded to the base substrate 610 by the bonding of the lid bonding portion 624 to the base bonding portion 617 of the base substrate 610.

Bonding methods include, for example, soldering using a silver solder or the like, sealing using an eutectic alloy layer, welding using low-melting-point glass, glass adhesion, glass frit bonding, adhesion using an epoxy resin, and the like, in addition to laser welding. These bonding methods can be appropriately selected depending on materials of the base substrate 610 and the lid 620, a bonding environment or the like.

The ceiling portion 626 of the lid 620 is parallel to the base substrate 610. A light passing hole 621 is formed in the ceiling portion 626 in an opening state. The glass substrate 640 on the lid side is bonded so as to cover the light passing hole 621. As a bonding method of the glass substrate 640 on the lid side, similarly to the bonding of the glass substrate 630 on the base side, for example, glass frit bonding, adhesion using an epoxy resin or the like can be used.

Operations and Effects of Third Embodiment

In the optical filter device 600 of the present embodiment as mentioned above, since the wavelength variable interference filter 5 is protected by the housing 601, it is possible to prevent the wavelength variable interference filter 5 from being broken due to external factors.

Other Embodiments

Meanwhile, the invention is not limited to the above-mentioned embodiment, but changes, modifications and the like within the range capable of achieving the object of the invention are included in the invention.

For example, in the above-mentioned first and second embodiments, the measurement wavelength region is set to be 400 nm to 700 nm, but other wavelength regions may be used as the measurement wavelength region without being limited thereto.

In addition, an example is illustrated in which all the full width at half maximums of the optical characteristics (spectral curve) for each wavelength to be measured (wavelength of measurement wavelength interval $\lambda c=20$ nm) within the measurement wavelength region are set to equal to or more than 30 nm. However, without being limited thereto, for example, optical characteristics may be used in which the full width at half maximum has a size of equal to or more than 30 nm with respect to at least one light out of light of multiple wavelengths to be measured, and the full width at half maximum is set to appropriately 20 nm in other wavelengths to be measured.

Further, in Figs. 5 and 13, an example of the optical characteristics of the wavelength variable interference filter 5 according to the invention is illustrated, but is not limited thereto. In the invention, the full width at half maximum in characteristics considering the optical characteristics of not only the wavelength variable interference filter 5, but also a plurality of optical members disposed on the wavelength variable interference filter 5, that is, the optical characteristics of the entire optical module may be set to equal to or more than the measurement wavelength interval.

For example, in the optical module 10 as shown in Fig. 1, a detection signal (current) having characteristics obtained by combining the optical characteristics of the wavelength variable interference filter 5 with sensitivity characteristics in the detector 11 is output from the detector 11. Therefore, in order to acquire the sufficient amount of light, the characteristics obtained by combining the optical characteristics of the wavelength variable interference filter 5 with the sensitivity characteristics in the detector 11 become optical characteristics as shown in Figs. 5 and 13, and the full width at half maximum in each wavelength may be set to equal to or more than the measurement wavelength interval $\lambda c$.

In addition, when a light source that emits light to an object to be measured is further included as the optical module 10, the configuration of the wavelength variable interference filter 5 and the optical members are set so that the full width at half maximum in the optical characteristics of the entire optical module 10 obtained by combining the optical characteristics of the wavelength variable interference filter 5 and the sensitivity characteristics in the detector 11 with the emission intensity characteristics of the light source is set to equal or more than the measurement wavelength interval. Meanwhile, as the optical module 10, when a filtering element such as a lens, a transmission glass plate, or a band pass filter, a mirror member and the like are provided on the light path of the wavelength variable interference filter 5, in consideration of the optical characteristics (transmittance characteristics and reflectance characteristics) of these optical members, the characteristics of each optical member and the reflective films 54 and 55 of the wavelength variable interference filter 5 may be set so that the full width at half maximum for each wavelength in the characteristics obtained by combining these optical characteristics is equal to or more than the measurement wavelength interval.

In Figs. 5 and 13, an example is illustrated in which the full width at half maximum is equal to or more than the measurement wavelength interval $\lambda c$ (data output wavelength interval $\lambda d$) in each spectral curve for each wavelength to be measured, but is not limited thereto. For example, a configuration may formed in which the full width at half maximum is equal to the measurement wavelength interval $\lambda c$ in the optical characteristics of any one wavelength to be measured of multiple wavelengths to be measured within the measurement wavelength region, and the full width at half maximum is smaller than the measurement wavelength interval $\lambda c$ in the optical characteristics of other wavelengths to be measured.

In the above-mentioned embodiment, as the gap change portion, the electrostatic actuator 56 constituted by the fixed electrode 561 and the movable electrode 562 is illustrated, but is not limited thereto.

For example, an inductive actuator constituted by a first inductive coil provided in the fixed substrate 51 and a second inductive coil or a permanent magnet provided in the movable substrate 52 may be used.

Further, a piezoelectric actuator may be used instead of the electrostatic actuator 56. In this case, for example, a lower electrode layer, a piezoelectric film, and an upper electrode layer are laminated on the holding portion 522, and a voltage applied between the lower electrode layer and the upper electrode layer is made available as an input value, thereby allowing the holding portion 522 to be bent by expanding and contracting the piezoelectric film.

Further, a configuration or the like in which the amount of the gap G1 between the reflective films is adjusted can also be used, for example, by changing air pressure between the fixed substrate 51 and the movable substrate 52, without being limited to the configuration in which the amount of the gap G1 between the reflective films is changed by voltage application.

In addition, as the spectroscope and the electronic device according to the invention, the spectrometer 1 is illustrated in each of the above-mentioned embodiments. However, besides, the spectroscope, the optical module, and the electronic device using the wavelength variable interference filter according to the invention can be applied to various fields.

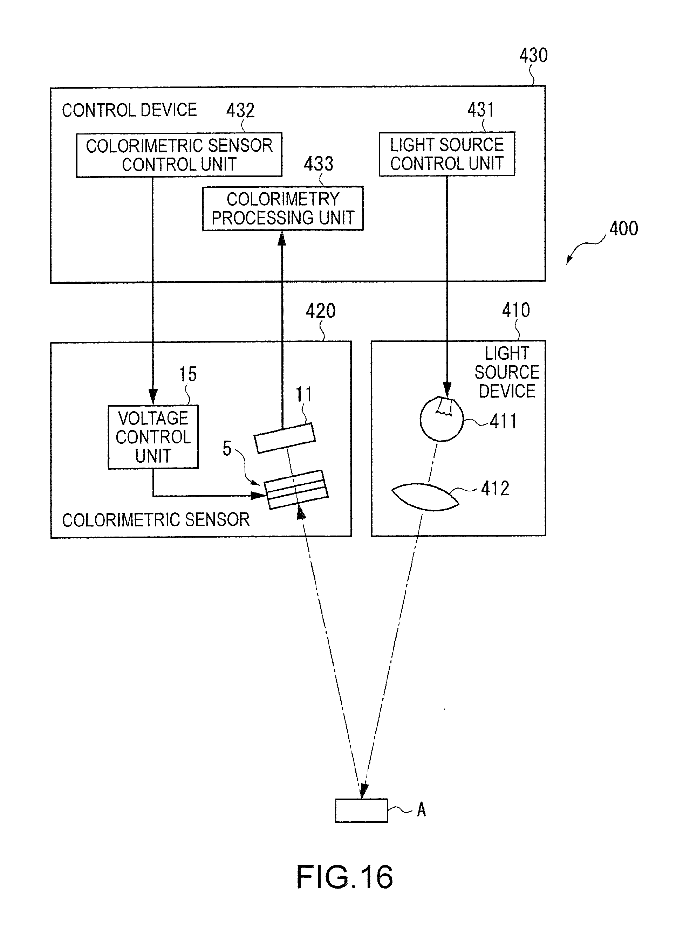

For example, as shown in Fig. 16, the spectroscope and the electronic device according to the invention can also be applied to a colorimeter for measuring a color.

Fig. 16 is a block diagram illustrating an example of a colorimeter 400 including a wavelength variable interference filter.

As shown in Fig. 16, the colorimeter 400 includes a light source device 410 that emits light to a test object A, a colorimetric sensor 420 (optical module), and a control device 430 (processing unit) that controls the entire operation of the colorimeter 400. The colorimeter 400 is a device that reflects light emitted from the light source device 410 in the test object A, receives the reflected light to be tested in the colorimetric sensor 420, and analyzes and measures the chromaticity of the light to be tested, that is, the color of the test object A, on the basis of a detection signal which is output from the colorimetric sensor 420.

Including the light source device 410, a light source 411, and a plurality of lenses 412 (only one is shown in Fig. 16), for example, reference light (for example, white light) is emitted to the test object A. In addition, a collimator lens may be included in the plurality of lens 412. In this case, the light source device 410 changes the reference light emitted from the light source 411 to parallel light using the collimator lens, and emits the parallel light from a projection lens, not shown, toward the test object A. Meanwhile, in the present embodiment, the colorimeter 400 including the light source device 410 is illustrated, but when the test object A is, for example, a light-emitting member such as a liquid crystal panel, the light source device 410 may not be provided.

As shown in Fig. 16, the colorimetric sensor 420 includes the wavelength variable interference filter 5, the detector 11 that receives light passing through the wavelength variable interference filter 5, and the voltage control unit 15 that controls a voltage applied to the electrostatic actuator 56 of the wavelength variable interference filter 5. In addition, the colorimetric sensor 420 includes an incident optical lens, not shown, which guides reflected light (light to be tested) reflected from the test object A into the inside, at a position facing the wavelength variable interference filter 5. The colorimetric sensor 420 spectroscopically disperses light of a predetermined wavelength out of the light to be tested which is incident from the incident optical lens by the wavelength variable interference filter 5, and receives the spectroscopically dispersed light in the detector 11.

The control device 430 controls the entire operation of the colorimeter 400.

As the control device 430, for example, a general-purpose personal computer, a portable information terminal, other special computers for colorimetry, or the like can be used. As shown in Fig. 16, the control device 430 includes a light source control unit 431, a colorimetric sensor control unit 432, a colorimetry processing unit 433, and the like.

The light source control unit 431 is connected to the light source device 410, outputs a predetermined control signal to the light source device 410, for example, on the basis of a user's setting input, and emits white light of predetermined brightness.

The colorimetric sensor control unit 432 is connected to the colorimetric sensor 420, sets the wavelength of light received by the colorimetric sensor 420, for example, on the basis of a user's setting input, and outputs a command signal for detecting the amount of received light of the wavelength to the colorimetric sensor 420. Thereby, the voltage control unit 15 of the colorimetric sensor 420 applies a voltage to the electrostatic actuator 56 on the basis of the control signal, and drives the wavelength variable interference filter 5.

The colorimetry processing unit 433 is a processing unit according to the invention, and analyzes the chromaticity of the test object A from the amount of received light detected by the detector 11. Specifically, similarly to the first and the second embodiments mentioned above, the colorimetry processing unit 433 analyzes the chromaticity of the test object A by using the amount of light obtained by the detector 11 as the measurement spectrum D, and estimating the optical spectrum S using the estimation matrix Ms.

In addition, another example of the electronic device according to the invention includes a light-based system for detecting the presence of a specific substance. As such a system, for example, a spectroscopic measurement system using a wavelength variable interference filter according to the invention is adopted, and a gas leak detector for a vehicle that detects a specific gas with a high degree of sensitivity, or a gas detector such as a photoacoustic rare gas detector for a breath test can be used.

An example of such a gas detector will be described below with reference to the accompanying drawings.

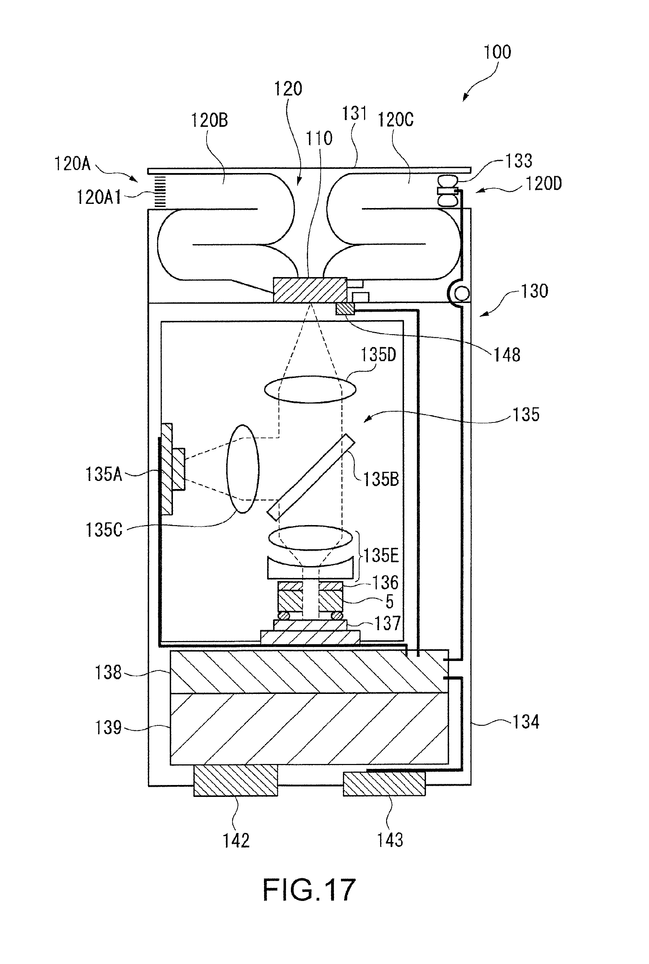

Fig. 17 is a schematic diagram illustrating an example of a gas detector including a wavelength variable interference filter.

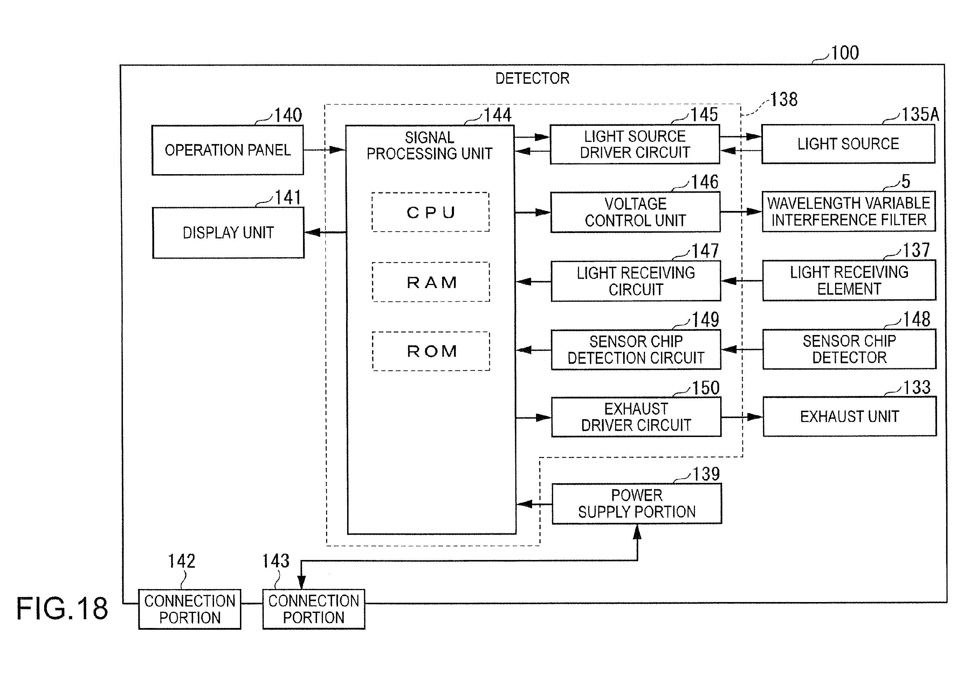

Fig. 18 is a block diagram illustrating a configuration of a control system of the gas detector of Fig. 17.

As shown in Fig. 17, the gas detector 100 includes a sensor chip 110, a flow channel 120 provided with a suction port 120A, a suction flow channel 120B, an exhaust flow channel 120C, and an exhaust port 120D, and a main body 130.

The main body 130 is constituted by a detector including a sensor cover 131 having an opening capable of attaching and detaching the flow channel 120, an exhaust unit 133, a housing 134, an optical portion 135, a filter 136, a wavelength variable interference filter 5, a light receiving element 137 (detection unit) and the like, a control unit 138 that processes a detected signal and controls the detection unit, a power supply portion 139 that supplies power, and the like. In addition, the optical portion 135 is constituted by a light source 135A that emits light, a beam splitters 135B that reflects light incident from the light source 135A to the sensor chip 110 side and transmits light incident from the sensor chip side to the light receiving element 137 side, and lenses 135C, 135D, and 135E.

In addition, as shown in Fig. 18, the surface of the gas detector 100 is provided with an operation panel 140, a display unit 141, a connection portion 142 for an interface with the outside, and a power supply portion 139. When the power supply portion 139 is a secondary battery, a connection portion 143 for charge may be included.

Further, as shown in Fig. 18, the control unit 138 of the gas detector 100 includes a signal processing unit 144 constituted by a CPU and the like, a light source driver circuit 145 for controlling the light source 135A, a voltage control unit 146 for controlling the wavelength variable interference filter 5, a light receiving circuit 147 that receives a signal from the light receiving element 137, a sensor chip detection circuit 149 that receives a signal from a sensor chip detector 148 for reading a code of the sensor chip 110 and detecting the presence or absence of the sensor chip 110, an exhaust driver circuit 150 that controls the exhaust unit 133, and the like. In addition, the gas detector 100 includes a storage unit (not shown) that stores the V-λ data. The voltage control unit 146 controls a voltage applied to the electrostatic actuator 56 of the wavelength variable interference filter 5 on the basis of the V-λ data stored in the storage unit.

Next, operations of the gas detector 100 as mentioned above will be described below.

The sensor chip detector 148 is provided inside the sensor cover 131 located at the upper portion of the main body 130, and the presence or absence of the sensor chip 110 is detected by the sensor chip detector 148. When a detection signal from the sensor chip detector 148 is detected, the signal processing unit 144 determines that the sensor chip 110 is mounted, and emits a display signal for displaying an executable detection operation on the display unit 141.

When the operation panel 140 is operated by, for example, a user, and an instruction signal for starting a detection process is output from the operation panel 140 to the signal processing unit 144, first, the signal processing unit 144 causes the light source driver circuit 145 to operate the light source 135A by outputting a light source operation signal. When the light source 135A is driven, stable laser light of linearly polarized light having a single wavelength is emitted from the light source 135A. In addition, the light source 135A has a temperature sensor or a light amount sensor built-in, and its information is output to the signal processing unit 144. When it is determined that the light source 135A is stably operated on the basis of the temperature or the amount of light which is input from the light source 135A, the signal processing unit 144 controls the exhaust driver circuit 150 and brings the exhaust unit 133 into operation. Thereby, a gaseous sample including a target substance (gas molecules) to be detected is induced from the suction port 120A to the suction flow channel 120B, the inside of the sensor chip 110, the exhaust flow channel 120C, and the exhaust port 120D. Meanwhile, the suction port 120A is provided with a dust filter 120A1, relatively large dust particles, some vapor and the like are removed.

In addition, the sensor chip 110 is a sensor, having a plurality of metal nanostructures built-in, in which localized surface plasmon resonance is used. In such a sensor chip 110, an enhanced electric field is formed between metal nanostructures by laser light, and gas molecules gain entrance into the enhanced electric field, Raman scattering light including information of a molecular vibration and Rayleigh scattering light are generated.

The Rayleigh scattering light and the Raman scattering light are incident on the filter 136 through the optical portion 135, the Rayleigh scattering light is split by the filter 136, and the Raman scattering light is incident on the wavelength variable interference filter 5. The signal processing unit 144 outputs a control signal to the voltage control unit 146. Thereby, as shown in the above-mentioned first embodiment, the voltage control unit 146 reads a voltage value corresponding to the wavelength to be measured from the storage unit, applies the voltage to the electrostatic actuator 56 of the wavelength variable interference filter 5, and spectroscopically disperses the Raman scattering light corresponding to gas molecules to be detected using the wavelength variable interference filter 5. Thereafter, when the spectroscopically dispersed light is received in the light receiving element 137, a light receiving signal according to the amount of light received is output to the signal processing unit 144 through the light receiving circuit 147. Here, the measurement spectrum D for each predetermined measurement wavelength interval is acquired with respect to the measurement wavelength region by changing the gap G1 between the reflective films of the wavelength variable interference filter 5, and the signal processing unit 144 estimates the optical spectrum S by causing the estimation matrix to act on the measurement spectrum D. The signal processing unit acquires spectrum data of Raman scattering light on the basis of the estimated optical spectrum S, compares the spectrum data with data stored in a ROM, and determines whether the targeted gas molecules are present, to specify the substances. In addition, the signal processing unit 144 causes the display unit 141 to display result information thereof, or outputs the result information from the connection portion 142 to the outside.

Meanwhile, in Figs. 17 and 18, the gas detector 100 is illustrated in which the Raman scattering light is spectroscopically dispersed by the wavelength variable interference filter 5 and a gas is detected from the spectroscopically dispersed Raman scattering light, but the gas detector may be used as a gas detector that specifies a gas type by detecting absorbance inherent in a gas. In this case, a gas sensor that causes a gas to flow into a sensor and detects light absorbed by a gas in the incident light is used as the optical module according to the invention. A gas detector that analyzes and discriminates the gas flowing into the sensor using such a gas sensor is used as the electronic device according to the invention. In such a configuration, it is also possible to detect gas components using the wavelength variable interference filter.

In addition, as a system for detecting the presence of a specific substance, a substance component analyzer such as a noninvasive measurement device of saccharide using near-infrared spectroscopy, or a noninvasive measurement device of information such as food, a living body, and a mineral can be used without being limited to the gas detection as mentioned above.

Hereinafter, a food analyzer will be described as an example of the above-mentioned substance component analyzer.

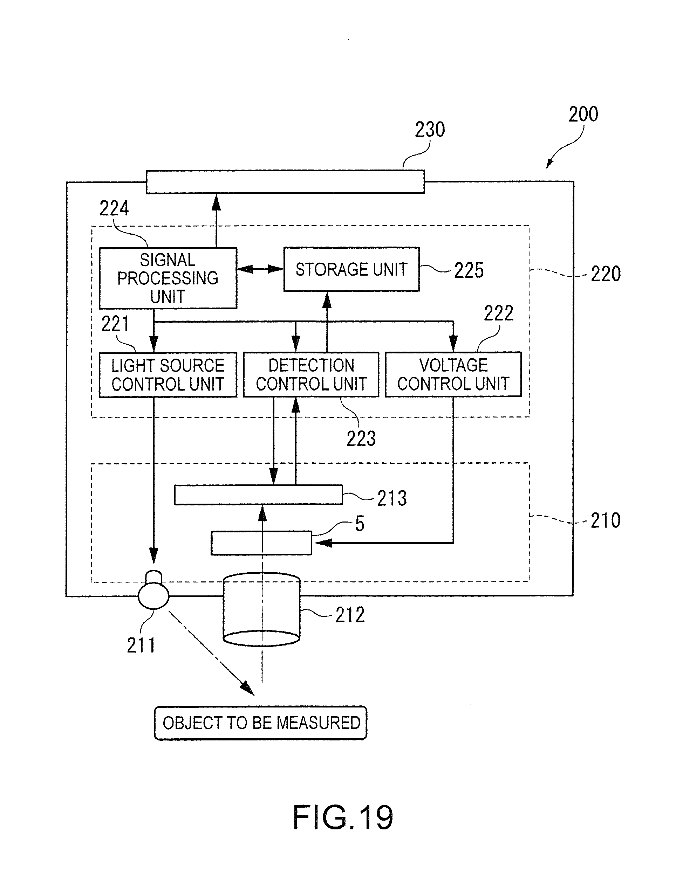

Fig. 19 is a diagram illustrating a schematic configuration of a food analyzer which is an example of the electronic device using the wavelength variable interference filter 5.

As shown in Fig. 19, a food analyzer 200 includes a detector 210 (optical module), a control unit 220, and a display unit 230. The detector 210 includes a light source 211 that emits light, an imaging lens 212 into which light from an obj ect to be measured is introduced, the wavelength variable interference filter 5 that spectroscopically disperses light introduced from the imaging lens 212, and an imaging unit 213 (detection unit) that detects spectroscopically dispersed light.

In addition, the control unit 220 includes a light source control unit 221 that performs turn-on and turn-off control of the light source 211 and brightness control at the time of turn-on, a voltage control unit 222 that controls the wavelength variable interference filter 5, a detection control unit 223 that controls the imaging unit 213 and acquires a spectroscopic image which is imaged by the imaging unit 213, a signal processing unit 224 (processing unit), and a storage unit 225.

The food analyzer 200 is configured such that when the system is driven, the light source 211 is controlled by the light source control unit 221, and light is applied from the light source 211 to an object to be measured. Light reflected from the object to be measured is incident on the wavelength variable interference filter 5 through the imaging lens 212. The wavelength variable interference filter 5 is controlled by the voltage control unit 222, and the wavelength variable interference filter 5 is driven by the driving method as shown in the first embodiment or the second embodiment mentioned above. Thereby, light of the wavelength region centered on a target wavelength is extracted from the wavelength variable interference filter 5. The extracted light is imaged by the imaging unit 213 which is constituted by, for example, a CCD camera and the like. In addition, the imaged light is accumulated in the storage unit 225 as a spectroscopic image. In addition, the signal processing unit 224 changes a voltage value applied to the wavelength variable interference filter 5 by controlling the voltage control unit 222, and acquires a spectroscopic image for each wavelength.

The signal processing unit 224 arithmetically processes data of each pixel in each image accumulated in the storage unit 225, and obtains a spectrum in each pixel. That is, an optical spectrum is estimated from a measurement spectrum for each pixel in a plurality of spectroscopic images obtained by performing the same process as that in the spectroscopic measurement unit 23 of the above-mentioned first embodiment.

In addition, for example, information on components of food regarding the spectrum is stored in the storage unit 225. The signal processing unit 224 analyzes data of the obtained spectrum on the basis of the information on the food stored in the storage unit 225, and obtains food components included in the object to be detected and the content thereof. In addition, food calorie, freshness and the like can be calculated from the obtained food components and content. Further, by analyzing a spectral distribution within the image, it is possible to extract a portion in which freshness deteriorates in food to be tested, and to detect foreign substances or the like included in the food.

The signal processing unit 224 performs a process of displaying information such as the components, the content, calorie, freshness and the like of the food to be tested which are obtained as mentioned above, on the display unit 230.

In addition, in Fig. 19, an example of the food analyzer 200 is illustrated, but the food analyzer can also be used as the above-mentioned noninvasive measurement device of other information using substantially the same configuration. For example, the food analyzer can be used as a living body analyzer that analyzes living body components, for example, measures and analyzes body fluid components such as blood. Such a living body analyzer is used as a device that measures, for example, body fluid components such as blood. When the analyzer is used as a device that detects ethyl alcohol, the analyzer can be used as an anti-drunk-driving device that detects the drinking condition of a driver. In addition, the analyzer can also be used as an electronic endoscope system including such as living body analyzer.

Further, the analyzer can also be used as a mineral analyzer that performs a component analysis of a mineral.

Further, the wavelength variable interference filter, the optical module, and the electronic device according to the invention can be applied to the following devices.

For example, it is also possible to transmit data using the light of each wavelength by temporally changing the intensity of the light of each wavelength. In this case, light of a specific wavelength is spectroscopically dispersed by the wavelength variable interference filter provided in the optical module, and is received in the light receiving unit, thereby allowing data transmitted by the light of a specific wavelength to be extracted. The data of the light of each wavelength is processed by the electronic device including such an optical module for data extraction, and thus it is also possible to perform optical communication.

In addition, the electronic device can also be applied to a spectroscopic camera, a spectroscopic analyzer and the like that image a spectroscopic image by spectroscopically dispersing light using the wavelength variable interference filter according to the invention. An example of such a spectroscopic camera includes an infrared camera having a wavelength variable interference filter built-in.

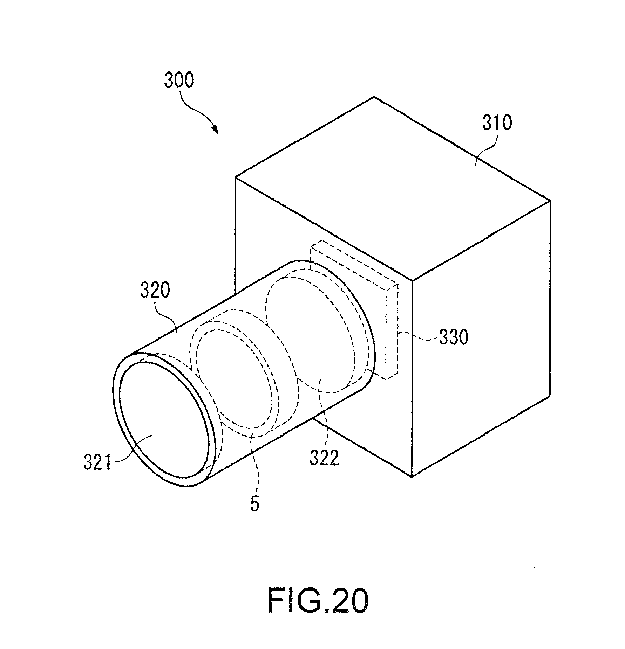

Fig. 20 is a schematic diagram illustrating a schematic configuration of a spectroscopic camera. As shown in Fig. 20, a spectroscopic camera 300 includes a camera body 310, an imaging lens unit 320, and an imaging unit 330 (detection unit).

The camera body 310 is a portion which is held and operated by a user.

The imaging lens unit 320 is provided in the camera body 310, and guides incident image light to the imaging unit 330. In addition, as shown in Fig. 20, the imaging lens unit 320 includes an objective lens 321, an imaging lens 322, and the wavelength variable interference filter 5 provided between these lenses.

The imaging unit 330 is constituted by a light receiving element, and images image light guided by the imaging lens unit 320.

In such a spectroscopic camera 300, it is possible to image a spectroscopic image of light having a desired wavelength by transmitting light of a wavelength serving as an imaging object using the wavelength variable interference filter 5.

In addition, the optical module and the electronic device can be used as a concentration detector. In this case, infrared energy (infrared light) emitted from a substance is spectroscopically dispersed and analyzed by the wavelength variable interference filter, and the concentration of a test object in a sample is measured.

As mentioned above, the wavelength variable interference filter, the optical module, and the electronic device according to the invention can also be applied to any device that spectroscopically disperses predetermined light from incident light. As mentioned above, since the wavelength variable interference filter according to the invention can spectroscopically disperse multiple wavelengths using one device, it is possible to accurately perform the measurement of a spectrum of multiple wavelengths, and the detection of a plurality of components. Therefore, as compared to a device of the related art that extracts a desired wavelength using a plurality of devices, the optical module and the electronic device can be facilitated to be reduced in size, and can be suitably used as, for example, a portable or in-car optical device.

Besides, a specific structure at the time of carrying out the invention can be appropriately changed to other structures in a range capable of achieving an object of the invention.

**Claims**

1. A spectroscope comprising:

   a first reflective film that is configured to reflect a portion of incident light and to transmit a portion thereof;
   a second reflective film, that is disposed to face the first reflective film and configured to reflect a portion of incident light and to transmit a portion thereof;
   a gap change portion that is configured to change a size of a gap between the first reflective film and the second reflective film so as to cause light incident on the first reflective film or the second reflective film to interfere with a wavelength to be measured; and
   a processing unit that is configured to output optical characteristic data of a first wavelength interval on the basis of light rays of a plurality of the wavelengths to be measured,
   wherein the first and second reflective films are configured so that a full width at half maximum of a spectrum of light capable of passing through the first reflective film and the second reflective film in the wavelength to be measured is larger than the first wavelength interval.

2. The spectroscope according to claim 1, further comprising a gap control unit that is configured to control the gap change portion and to change light of a wavelength to be measured capable of being transmitted by causing light incident between the first reflective film and the second reflective film to be interfered with at a second wavelength interval larger than the first wavelength interval,
   wherein the first and second reflective films are configured so that a full width at half maximum of a spectrum of at least one component of light among the light of a plurality of the wavelengths to be measured and capable of passing through the first reflective film and the second reflective film is larger than the second wavelength interval.

3. The spectroscope according to claim 2, further comprising an optical member provided on an optical axis of the first reflective film and the second reflective film,
   wherein the first and second reflective films and the optical member are configured so that a full width at half maximum of a spectrum in characteristics obtained by combining optical characteristics of light capable of passing through the first reflective film and the second reflective film with optical characteristics of the optical member is larger than the second wavelength interval.

4. The spectroscope according to any one of claims 1 to 3, wherein the processing unit is configured to perform a spectrum estimation of extracting a wavelength component of a principal component from a measurement spectrum based on the light of the plurality of wavelengths to be measured and removing other wavelength components, and to estimate an optical spectrum of incident light incident on the first reflective film and the second reflective film.

5. The spectroscope according to claim 4, wherein the processing unit is configured to cause a transformation matrix that transforms the measurement spectrum into an optical spectrum for the first wavelength interval to act on the measurement spectrum, and to estimate the optical spectrum.

6. The spectroscope according to any one of claims 1 to 5, wherein a minimum value of reflectance of the first reflective film and the second reflective film with respect to a measurement wavelength region on which a spectroscopic measurement can be performed by the spectroscope is equal to or less than 75% and equal to or more than 30%.

7. The spectroscope according to any one of claims 1 to 6, wherein the first reflective film or the second reflective film is formed of Ag or an Ag alloy, and a thickness size thereof is equal to or less than 40 nm and equal to or more than 15 nm.

8. The spectroscope according to any one of claims 1 to 7, wherein the first reflective film and the second reflective film are formed of a $TiO_2$ single-layer film or an ITO single-layer film.

9. The spectroscope according to any one of claims 1 to 8, wherein minimum transmittance of an interference filter constituted by the first reflective film and the second reflective film is equal to or more than 5% and less than 45% with respect to light of each wavelength within a measurement wavelength region on which a spectroscopic measurement can be performed by the spectroscope.

10. The spectroscope according to any one of claims 1 to 9, wherein at least one component of light among the light of a plurality of the wavelengths to be measured capable of passing through the first reflective film and the second reflective film has two or more maximum values in a measurement wavelength region on which a measurement can be performed by the spectroscope.

11. A wavelength variable interference filter comprising:

a first reflective film that is configured to reflect a portion of incident light and to transmit a portion thereof;
a second reflective film, provided facing the first reflective film with a gap interposed therebetween, which is configured to reflect a portion of incident light and to transmit a portion thereof; and
a gap change portion that is configured to change a gap between the first reflective film and the second reflective film,
wherein a minimum value of reflectance of the first reflective film and the second reflective film is equal to or less than 75% and equal to or more than 30%.

12. The wavelength variable interference filter according to claim 11, wherein the first reflective film or the second reflective film is formed of Ag or an Ag alloy, and a thickness size thereof is equal to or less than 40 nm and equal to or more than 15 nm.

13. An optical filter device comprising:

the wavelength variable interference filter according to claim 11 or 12; and
a housing that houses the wavelength variable interference filter.

14. An optical module comprising:

the wavelength variable interference filter according to claim 11 or 12; and
a detection unit that is configured to detect light capable of passing through the first reflective film and the second reflective film.

15. An electronic device comprising:

the wavelength variable interference filter according to claim 11 or 12; and
a control unit that is configured to control the wavelength variable interference filter.

16. A spectroscope comprising:

two reflective films which are disposed so as to face each other; and

a gap change portion that is configured to change a size of a gap between the two reflective films so as to cause light incident on the two reflective films to interfere with a wavelength to be measured,

wherein the spectroscope is configured so that a wavelength interval of a plurality of the wavelengths to be measured is smaller than a full width at half maximum of a spectrum of light of the wavelength to be measured capable of passing through the two reflective films.

FIG. 1

EP 2 711 674 A1

**FIG. 2**

**FIG. 3**

FIG. 4

FIG. 5

FIG. 6

FIG. 7

FIG. 8

FIG. 9

FIG.10

EP 2 711 674 A1

FIG.11

FIG.12

FIG.13

FIG.14

FIG.15

FIG.16

FIG.17

FIG.18

FIG.19

**FIG.20**

Europäisches
Patentamt

European
Patent Office

Office européen
des brevets

**EUROPEAN SEARCH REPORT**

Application Number

EP 13 18 4739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/313702 A1 (FUNAMOTO TATSUAKI [JP]) 22 December 2011 (2011-12-22) | 1,11,16 | INV.<br>G01J3/26 |
| Y | * figures 1,2A, 2B * | 1-16 | G02B5/28 |
| Y | US 2004/149915 A1 (GONCALVES DUARTE PAULO DA SILV [ZA]) 5 August 2004 (2004-08-05) * paragraphs [0004] - [0009]; claim 12 * | 1-16 | |
| Y | CHIA-YIN CHE ET AL: "Signal Processing for Optical Power Spectrum Monitoring", 2006 FORTIETH ASILOMAR CONFERENCE ON SIGNALS, SYSTEMS AND COMPUTERS, 1 October 2006 (2006-10-01), pages 559-563, XP055092576, DOI: 10.1109/ACSSC.2006.354810 ISBN: 978-1-42-440784-2 * paragraphs [000I], [00II] * | 1-16 | |

TECHNICAL FIELDS
SEARCHED      (IPC)

G01J
G02B

The present search report has been drawn up for all claims

| Place of search | Date of completion of the search | Examiner |
|---|---|---|
| Munich | 10 December 2013 | Rödig, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 18 4739

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2013

| Patent document cited in search report | Publication date | Patent family member(s) | Publication date |
|---|---|---|---|
| US 2011313702 A1 | 22-12-2011 | JP 2012007890 A <br> US 2011313702 A1 <br> US 2013311125 A1 | 12-01-2012 <br> 22-12-2011 <br> 21-11-2013 |
| US 2004149915 A1 | 05-08-2004 | CA 2445680 A1 <br> EP 1384051 A1 <br> US 2004149915 A1 <br> WO 02088646 A1 | 07-11-2002 <br> 28-01-2004 <br> 05-08-2004 <br> 07-11-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1094312 A